# EUROPEAN PATENT SPECIFICATION

(11) **EP 1 613 008 B1**
(45) Date of publication and mention of the grant of the patent: **29.08.2012**
(21) Application number: 05014077.1
(22) Date of filing: 29.06.2005
(51) Int. Cl.: H04L 12/56

(54) **Queue object control system and method, control server, queue object terminal, user terminal and recording medium**
System und Verfahren zur Steuerung von Warteschlangenobjekten, Steuerservern, Station eines Warteschlangenobjektes, Teilnehmerendgerät und Aufnahmemedium
Système et procédé de contrôle d'objets de file d'attente, serveur de contrôle, terminal d'objet de file d'attente, terminal utilisateur et support d'enregistrement

(30) Priority: 30.06.2004 JP 2004193525
(43) Date of publication of application: 04.01.2006
(73) Proprietor: NEC Corporation, Minato-ku Tokyo 108-8001 (JP)
(72) Inventor: Tsutazawa, Natsuko, Tokyo, 108-8001 (JP); Ito, Naoko, Tokyo, 108-8001 (JP); Watanabe, Masafumi, Tokyo, 108-8001 (JP)
(74) Representative: Vossius & Partner

(56) References cited:
- US-A1- 2003 041 105

## Description

The present invention relates to a control system for controlling turn-waiting queues of people wishing to use services at queue objects, which are facilities or stores that offer services.

The control of turn-waiting queues of people wishing to use the services of service providers is performed in a wide variety of fields. In examples of queue control methods of the prior art, in order to receive a desired service, users were compelled to queue and register in stores that offered a service one store at a time and were unable to queue in a plurality of stores at one time. With the development of communication means, however, a user was able to reserve places in lines of a plurality of stores from the user's terminal, but once the user gained entrance to any store, the problem was encountered that the user was unable to collectively cancel turn-waiting in the other stores that the user, although queued, would not enter, and users without any actual need therefore remained registered in queues. In addition, since there were no queues for desired services that combined the plurality of stores that were able to provide a service, users were compelled to line up in the queue that was prepared for each store that was able to offer a service.

Customer introduction systems have been disclosed that include an information-sharing means that allows mutual recognition of the queue states among a plurality of facilities, whereby crowded facilities introduce customers to facilities that are not crowded, the facilities that are thus introduced paying an introduction fee to the facilities that introduced the customers (Refer to Japanese Patent Laid-Open Publication No. 2004-054591). Although crowding in a queue can thus be mitigated, the problem still remains that the content of the service that a customer seeks cannot be ascertained by the facility until the customer enters the store.

An amusement facility reservation device has been disclosed in which IC cards are prepared for each customer, reservations are coordinated according to the desired time of use and the amusement facilities that are designated by the customers, and when an opening occurs in a designated amusement facility at a designated time, this state is displayed and communicated to the customer's terminal (Refer to Japanese Patent Laid-Open Publication No. 2001-202406). In addition, a reservation system has been disclosed in which a host device is provided for controlling the state of reservations in a plurality of hospitals, whereby, when a desired reservation time and location of a hospital to be reserved are supplied as input from a subscriber's terminal, the states of reservations in a plurality of relevant hospitals are displayed on the terminal, and the subscriber is thus enabled to select from among these hospitals and make a reservation (Refer to Japanese Patent Laid-Open Publication No. 2002-351975).

As described above, in order to enable a user to quickly receive a desired service in queue control methods of the prior art that employ terminals, the user was compelled to separately enter and register at a plurality of stores that offer the service. In other words, even when any store that provides a service is adequate as long as desired conditions are met, the user was compelled to take the time and trouble of searching for stores that meet desired conditions and then separately enter and register in each store. To date, a system has not been provided in which, by merely entering desired conditions, a user can enter and register in a plurality of corresponding stores. In the systems of the prior art, moreover, a user was not able to designate in advance the conditions of a service desired by the user, such as no-smoking seating.

Furthermore, the service-provider side also lacked any means for learning the conditions desired by users before customers entered and were received in the store and were therefore compelled to question users regarding desired conditions upon their arrival in the store. The service-provider side further lacked a means for collectively investigating the desires of users that were lined up in turn-waiting queues.

The entertainment facility reservation device that was disclosed in Japanese Patent Laid-Open Publication No. 2001-202406 enables simultaneous reservations for a plurality of facilities, but does not cancel other queues when a user has been able to use a queue object, and this device therefore does not provide a solution to the problem described above.

In the reservation system that is disclosed in Japanese Patent Laid-Open Publication No. 2002-351975, a plurality of object candidates are indicated before queuing and one of these candidates is then selected for queuing, but this system also fails to provide a solution to the above-described problem.

US 2003/0041105 A discloses a system for queuing a plurality of clients for services. The system comprises a plurality of client pagers and a plurality of host pagers, wherein each pager is being carried by a waiter. A client queue corresponds to each zone. A host queue corresponds to each zone.

It is an object of the present invention to provide a queue object control system as defined in the appended claims that can shorten the time that people who wish to use a service must wait for a turn and that, for the service provider, can ease the burden of receiving customers.

The queue object control system includes: queue object terminals that are established in queue objects; user terminals for queue registration for making reservations of the queue objects; and a control server for both accepting queue registrations from the user terminals and controlling the turn-waiting queues at the queue objects based on the queue registrations that have been accepted; the control server including: queue object groups for controlling, in group units into which the queue objects have been sorted according to prescribed categories, turn-waiting queues of a plurality of the queue objects; a queue object control unit for controlling the states of usability of queue objects that belong to the queue object groups based on states of usability of the queue objects that are received from the queue object terminals; a queue manipulation unit for, upon receiving requests from the user terminals for queue registration to the queue object groups, both registering user information that is based on the queue registration requests in the turn-waiting queues at the queue object groups, and, upon receiving notification from the queue object control unit indicating that a queue object that belongs to the queue object group can be used, selecting the user terminal that is to be the transmission destination based on the user information that has been registered in the turn-waiting queue of the queue object group; and a usability notification unit for transmitting notification of usability regarding the queue objects that can be used to user terminals that have been selected in the queue manipulation unit.

The control server may include a user favorite group registration means by which users may register in advance a plurality of queue objects as individual users' groups; and the queue manipulation unit may, upon receiving requests from the user terminals to register to the group turn-waiting queues of users' favorite groups, register in the turn-waiting queues of the users' favorite groups.

According to another mode, the user terminals are capable of performing queue registrations directly to the queue object terminals for reserving the use of queue objects; the queue manipulation unit of the control server, upon accepting use reservations for the queue object groups from the user terminals, both registers the use reservations in the turn-waiting queues and reports the use reservations to each of the queue object terminals that are the objects of reservations and transfers the assignment of vacant seating; and these queue object terminals include queue manipulation units that register and control use reservations that have been reported from the control server and direct use reservations from the user terminals in turn-waiting queues and assign vacant seating of the queue objects that correspond to these queue object terminals.

The control server may also include a charge information control unit for accumulating charge information for each queue object, and charge information that corresponds to queue objects that become available for use may be updated at the queue object control units.

The control server is connected by way of a network to queue object terminals that are established at queue objects and to user terminals for making queue registrations for making reservations to the queue objects, and both accepts queue registrations from the user terminals and controls turn-waiting queues at the queue objects based on the queue registrations that have been accepted; the control server including: queue object groups for controlling, in group units into which the queue objects have been sorted according to prescribed categories, the turn-waiting queues in each of a plurality of queue objects; a queue object control unit for controlling the state of usability of queue objects that belong to the queue object groups based on the states of usability of the queue objects that are supplied from the queue object terminals; a queue manipulation unit for, upon receiving queue registration requests from the user terminals for the queue object groups, both registering user information based on the queue registration requests to the turn-waiting queues in the queue object groups and, upon receiving notification from the queue object control unit indicating that queue objects that belong to the queue object groups have become usable, selecting user terminals that are to be the transmission destination based on the user information that has been registered in the turn-waiting queues of the queue object groups; and a usability notification unit for transmitting notification of usability regarding a queue object that has become available for use to the user terminals that have been selected by the queue manipulation unit.

The queue object terminals are the queue object terminals of a queue object control system in which queue object terminals that are established in queue objects, user terminals for registering in turn-waiting queues to the queue objects, and a control server for controlling the turn-waiting queues are connected by way of a network so as to allow communication; the queue object terminals each including a data processor and a storage unit; the storage unit including a current state information storage unit for storing current state information that includes the current availability of vacant seating and the number of vacant seats; and the data processor including: a current state information acceptance unit for accepting current state information that has been received as input, a current state information updating unit for updating the current state information that is stored in the current state information storage unit in accordance with current state information that has been received as input, and a current state information transmitter for transmitting current state information that has been updated to prescribed transmission destinations.

The user terminals are the user terminals of a queue object control system in which queue object terminals that are established at queue objects, user terminals for registering in turn-waiting queues to the queue objects, and a control server for controlling the turn-waiting queues are connected by way of a network so as to allow communication; the user terminals each including: a operator input unit for entering information, a queue reservation information production unit for producing queue reservation information by means of information that has been applied as input by the operator input unit, a queue reservation transmitter for transmitting queue reservation information that has been produced to a prescribed output destination, and a summary information acceptance unit for accepting summary information that has been received from the control server and that includes the occurrence of vacant seating relating to queue objects for which queue registration has been carried out. The user terminal may consist of a portable telephone or a portable information terminal, or may consist of a private input/output device.

The queue object control method is the queue object control method of a queue object control system in which queue object terminals that are established at queue objects, user terminals for registering in turn-waiting queues to the queue objects, and a control server for controlling the turn-waiting queues are connected by way of a network so as to allow communication; the queue object control method including steps wherein: the queue object terminals transmit current state information that includes the state of usability of the queue objects to the control server, the control server collectively stores and controls the current state information that has been received from the queue object terminals; the user terminals transmit prescribed queue reservation requests to queue object groups based on the content that has been entered by users by way of operation units; the control server accepts queue reservation requests from the user terminals and registers the requests in the group turn-waiting queues; the control server recognizes queue objects that have become available for use based on current state information of queue objects that has been stored, selects user terminals that are registered in the group turn-waiting queues of the queue objects, generates, as summary information, vacant seating information relating to the queue objects based on queue object information summarization rules, and transmits the vacant seating information to the user terminals that have been selected; and the user terminals accept the vacant seating information for the queue objects that have been reserved.

The recording medium is a recording medium in which a control program is recorded for controlling the control server of a queue object control system in which queue object terminals that are established at queue objects, user terminals for registering in turn-waiting queues to the queue objects, and a control server for controlling the turn-waiting queues are connected by way of a network so as to allow communication; the recording medium recording a program for causing the computer of the control server to execute procedures for: controlling a plurality of queue objects as group turn-waiting queues; receiving states of usability of the queue objects from the queue object terminals and controlling whether any of the queue objects of the queue object groups can be used; receiving requests that have been transmitted from the user terminals for queue registration to the queue object groups and registering in the group turn-waiting queues, and when any of the queue objects of the queue object groups becomes available for use, selecting user terminals that are registered in the group turn-waiting queues; and transmitting notification indicating the ability to use queue objects that have become available for use to the user terminals that have been selected.

The present invention according to the foregoing description has the following merits:
1) Because joining the turn-waiting queue of a group of queue objects that can provide the same type service has the same effect as joining the turn-waiting queues of each of the queue objects that are included in the queue object group, the present invention reduces the inconvenience for users of joining queues.
2) When vacant seating becomes available in a queue object, the seating is assigned to the user that is at the head of the turn-waiting queue of the queue object group, whereby users are appropriately apportioned to queue objects in which vacant seating has occurred, and queue control is made more efficient.
3) Queue objects that can provide services that meet the conditions demanded by users are organized as groups, whereby the degree of satisfaction of users can be maintained.
4) An order of priority can be established in queue control, whereby good customers can be given priority in processing and favorable service can be provided to users.
5) Because queue objects can be intentionally selected for placement in queue object groups, preferential service can be provided to queue objects, such as placing specific queue objects in queue object groups having long turn-waiting queues.
6) Because information regarding users that are in turn-waiting queues can be provided to the queue object side, queue control can be implemented that more effectively draws customers.
The above and other objects, features, and advantages of the present invention will become apparent from the following description with reference to the accompanying drawings, which illustrate examples of the present invention.

### Brief Description of the Drawings:

FIG. 1 is a block diagram showing the configuration of a queue object control system according to the first embodiment of the present invention;
FIG. 2 is a block diagram showing the configuration of a queue control server that makes up a part of the queue object control system that is shown in FIG. 1;
FIG. 3 is a block diagram showing the configuration of a store terminal that makes up a part of the queue object control system that is shown in FIG. 1;
FIG. 4 is a block diagram showing the configuration of a user terminal that makes up a part of the queue object control system that is shown in FIG. 1;
FIG. 5 is a flow chart showing the overall flow of processes in the queue object control system that is shown in FIG. 1;
FIG. 6 is a schematic explanatory view of the queue object control system according to the first embodiment of the present invention in which there is a single store group;
FIG. 7 is a schematic explanatory view of the queue object control system according to the first embodiment of the present invention in which there is a plurality of store groups;
FIG. 8 is a block diagram showing the configuration of the queue object control system according to the second embodiment of the present invention;
FIG. 9 is a block diagram showing the configuration of the queue control server that makes up a part of the queue object control system that is shown in FIG. 8;
FIG. 10 is a block diagram showing the configuration of the queue object control system according to the third embodiment of the present invention;
FIG. 11 is a block diagram showing the configuration of the queue control server that makes up a part of the queue object control system that is shown in FIG. 10;
FIG. 12 is a schematic explanatory view of the queue control server that makes up a part of the queue object control system that is shown in FIG. 10;
FIG. 13 is a block diagram showing the configuration of the queue object control system according to the fourth embodiment of the present invention;
FIG. 14 is a block diagram showing the configuration of the queue control server that makes up a part of the queue object control system that is shown in FIG. 13;
FIG. 15 is a block diagram showing the configuration of the store group generation unit of the queue control server that is shown in FIG. 14;
FIG. 16 is a block diagram showing the configuration of the user terminal that makes up a part of the queue object control system that is shown in FIG. 13;
FIG. 17 is a block diagram showing the configuration of the queue control server that makes up a part of the queue object control system according to the fifth embodiment of the present invention;
FIG. 18 is a block diagram showing a schematic view of the configuration of the user terminal that makes up a part of the queue object control system according to the fifth embodiment of the present invention;
FIG. 19 is a block diagram showing the configuration of the queue control server that makes up a part of the queue object control system that is the first mode of the sixth embodiment of the present invention;
FIG. 20 is a block diagram showing the configuration of the store terminal that makes up a part of the queue object control system that is the first mode of the sixth embodiment of the present invention;
FIG. 21 is a block diagram showing the configuration of the user terminal that makes up a part of the queue object control system that is the first mode of the sixth embodiment of the present invention;
FIG. 22 is a schematic view for explaining the operation of the queue object control system that is the first mode of the sixth embodiment of the present invention;
FIG. 23 is a schematic view for explaining the operation of another example of the queue object control system that is the first mode of the sixth embodiment of the present invention;
FIG. 24 is a schematic view for explaining the operation of the queue object control system that is the second mode of the sixth embodiment of the present invention;
FIG. 25 is a block diagram showing the configuration of the queue control server that makes up a part of the queue object control system that is the third mode of the sixth embodiment of the present invention;
FIG. 26 is a block diagram showing the configuration of the store terminal that makes up a part of the queue object control system that is the fourth mode of the sixth embodiment of the present invention;
FIG. 27 is a block diagram showing the configuration of the queue object control system according to the seventh embodiment of the present invention; and
FIG. 28 is a block diagram showing the configuration of the queue control server that makes up a part of the queue object control system that is shown in FIG. 27.

### Detailed Description of the Preferred Embodiments:

The present invention is a system by which users make applications by way of a communication network to reserve services that are provided by facilities or stores that are the queue objects, and is a system that both enables a reduction of the time that users must spend waiting in turn-waiting queues to receive desired services and that can lighten the reception work in which the wishes of the users are investigated to determine, for example, whether desired seating is available in the queue objects. This system has various levels of service. For example, if a user enters search keywords such as "sushi," "no smoking," and "vacant seating available" as conditions for a sushi restaurant having vacant seating in the "no-smoking" section, the system can select a plurality of sushi restaurants from information on sushi restaurants that is registered in a database and register the user in a queue to enter these restaurants.

In the present invention, a queue object control system can be provided that controls the queues of queue objects for queue object groups that take as object, for example, queue objects that include the queues of individual venues in an event site. For the sake of simplifying the explanation in the embodiments, stores are taken as the queue objects and store groups are taken as the queue object groups. The queue object groups take in a wide range of groups of businesses that are the objects of queues. For example, a queue object group is a group of objects that have been selected according to conditions indicated by a person requesting service from a list that has been registered in advance. More specifically, queue objects include service-providing businesses that include stores, restaurants, and cafés.

The following explanation regards the embodiments of the present invention with reference to the accompanying figures.

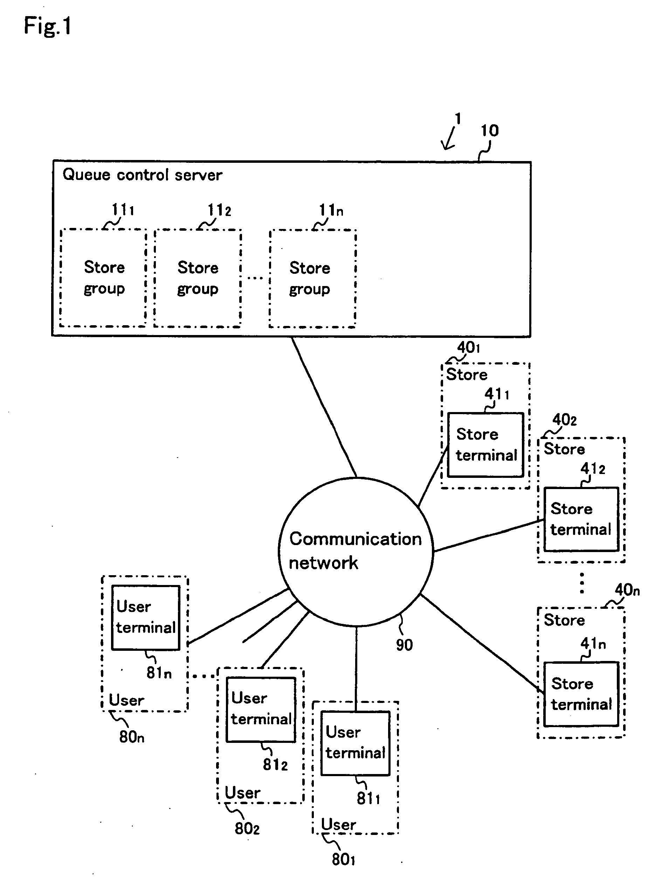

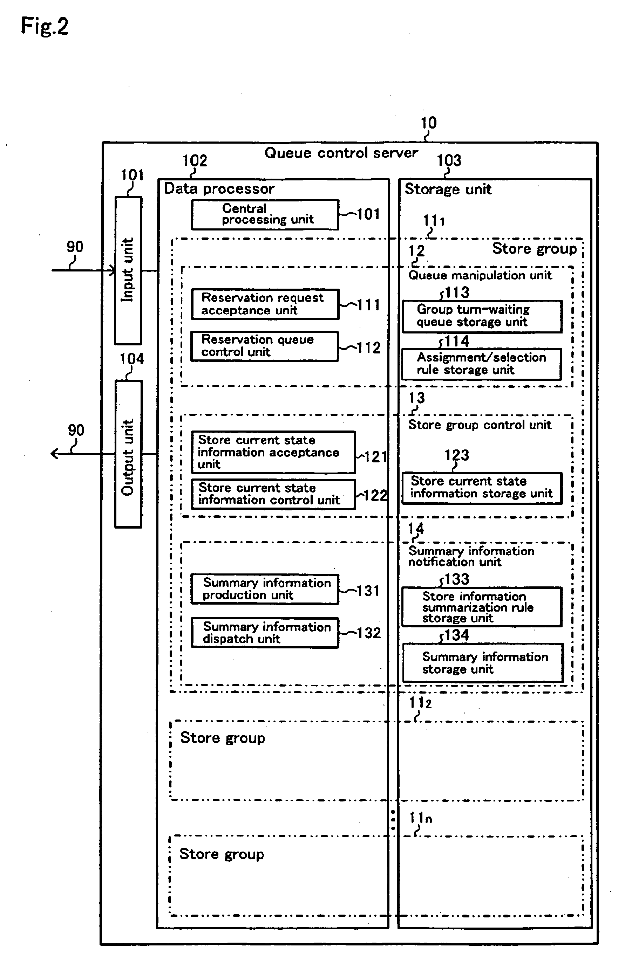

FIG. 1 shows the configuration of the queue object control system that is the first embodiment of the present invention. In addition, FIGs. 2, 3, and 4 each show the configurations of the queue control server, store terminal, and user terminal, respectively, that make up the queue object control system that is shown in FIG. 1.

Referring first to FIG. 1, queue object control system 1 includes: queue control server 10, a plurality of store terminals 41₁-41ₙ and a plurality of user terminals 81₁-81ₙ that are connected to queue control server 10 by way of communication network 90 to allow mutual communication. Store terminals 41₁-41ₙ are established at stores 40₁-40ₙ, which are the queue objects, and supply as output current state information that includes the states of usability of each of the stores. User terminals 81₁-81ₙ are terminals that are used by users 80₁-80ₙ, who are people wishing to use stores 40₁-40ₙ. The users can use the user terminals to register in queues for reserving use of the stores and to obtain current state information of desired stores. Queue control server 10 controls the current state information of stores 40₁-40ₙ and the store reservation information in units of store groups.

In queue control server 10, the current state information of stores 40₁-40ₙ is divided into one or more groups and registered. In the example shown in FIG. 1 and FIG. 2, the current state information of stores 40₁-40ₙ is divided into a plurality of store groups 11₁-11ₙ and registered in queue control server 10. In addition, although not shown, the operator of queue object control system 1 can access queue control server 10 from an operator terminal by way of communication network 90 and set or alter conditions.

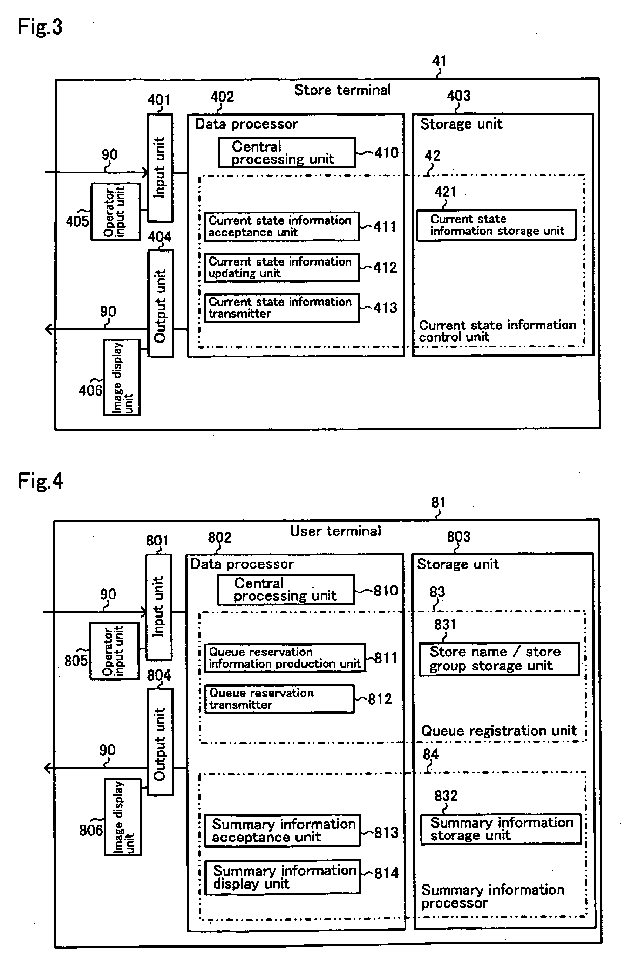

Store terminals 41₁-41ₙ are all terminals that consist of computers. FIG. 3 shows a schematic configuration of one of these store terminals. Referring to FIG. 3, store terminal 41 includes: input unit 401, output unit 404, data processor 402, storage unit 403, operator input unit 405 by which an operator can enter commands or data, and image display unit 406 that can display data on a screen. Storage unit 403 includes current state information storage unit 421 for storing current state information such as the content of a provided service, whether vacant seating is currently available, and the number of vacant seats. Data processor 402 includes: central processing unit 410 for collecting the processing of each component, current state information acceptance unit 411 for accepting current state information that has been entered by operator input unit 405, current state information updating unit 412 for updating the current state information that is stored in current state information storage unit 421 based on the current state information that has been accepted, and current state information transmitter 413 for transmitting current state information that has been updated to store group control unit 13 of store group 11 of queue control server 10 to which the store belongs. Current state information control unit 42 consists of current state information acceptance unit 411, current state information updating unit 412, current state information transmitter 413, and current state information storage unit 421.

User terminals 81₁-81ₙ are all terminals that consist of computers, and for example, may be portable telephones, portable information terminals, or terminals such as private devices. FIG. 4 shows the schematic configuration of one of these user terminals. Referring to FIG. 4, user terminal 81 includes: input unit 801, data processor 802, storage unit 803, output unit 804, operator input unit 805 that allows an operator to enter commands or data, and image display unit 806 that can display data on a screen.

Storage unit 803 includes: store name/store group storage unit 831 for storing the names of stores and the names of store groups that have been acquired and the current state information for the stores and store groups, and summary information storage unit 832 for storing summary information that includes the state of vacant seating of stores that has been transmitted from queue control server 10. When there is no need for using the store name/store group information that has been stored, store name/store group storage unit 831 may be omitted. When there is no need to store store name/store group information, summary information storage unit 832 may be omitted.

Data processor 802 includes: central processing unit 810 for collecting the processing of each unit; queue reservation information production unit 811 for producing queue reservation information from information that the operator has applied as input from operator input unit 805 after, for example, referring to the stored content of store name/store group storage unit 831; queue reservation transmitter 812 for transmitting queue reservation information that has been produced to queue control server 10; summary information acceptance unit 813 for accepting summary information that includes the occurrence of vacant seating relating to a store for which queue registration has been carried out and that has been received from queue control server 10; and summary information display unit 814 for displaying summary information on image display unit 806. Users are able to learn whether vacant seating has occurred in a registered store based on the summary information.

The current state information and the store name and store group name that are stored in store name/store group storage unit 831 are obtained from information from the web server of queue control server 10. For the production of queue reservation information by queue reservation information production unit 811, users may directly enter information that includes desired store names and desired conditions through operator input unit 805. Otherwise, when user terminal 81 transmits a store group name to queue control server 10, a list having spaces for designating information such as store names and desired conditions may be transmitted from queue control server 10 to user terminal 81. In this case, store names or conditions are entered in the spaces in the received list on user terminal 81. The information, i.e., the store names or conditions that have been applied as input, is transmitted from user terminal 81 to queue control server 10.

Reservation request acceptance unit 111 of queue control server 10 may be provided with word extraction software for extracting words from text. In this case, reservation request acceptance unit 111 can convert queue reservation information that is transmitted from queue registration unit 83 of user terminal 81 to text by means of the word extraction software.

One or a plurality of stores may be designated as the desired store. Alternatively, the desired store may be left to the user's discretion. Desired conditions may include, for example, the store's business hours, and further, such desired conditions as articles that are offered, seating in the no-smoking section, seating for four people, lightly air-conditioned seating, or the availability of child-care facilities. When users are registered on a specific member list, this registration or its lack can be included in the queue reservation information. Queue manipulation unit 12 of queue control server 10 makes assignments to group turn-waiting queues of group turn-waiting queue storage unit 113 and assigns vacant seating to users in accordance with assignment/selection rules that are stored in assignment/selection rule storage unit 114.

Queue registration unit 83 is made up by: queue reservation information production unit 811, queue reservation transmitter 812, and store name/store group storage unit 831. Summary information processor 84 is made up from: summary information acceptance unit 813, summary information display unit 814, and summary information storage unit 832.

Queue control server 10 is a server that controls information relating to the turn-waiting queues of stores for each store group that is composed according to prescribed standards. The manipulation of user queues in all store groups, the control of current state information that includes the states of vacant seating of stores, the production of summary information that includes vacant seating information, and the dispatch of this information to users are all controlled in this queue control server 10.

As shown in FIG. 2, queue control server 10 includes: input unit 101, output unit 104, data processor 102, and storage unit 103. Each of store groups 11₁-11ₙ includes: queue manipulation unit 12, store group control unit 13, and summary information notification unit 14. In this case, a plurality of store groups is provided, but a single store group is also possible. In other embodiments, store groups are provided with only group turn-waiting queue storage unit 113, and the components other than group turn-waiting queue storage unit 113, i.e., queue manipulation unit 12, store group control unit 13, and summary information notification unit 14, are provided as shared functions.

The stores that make up store groups are stores that meet specific conditions. Standards for forming groups include, for example, food categories, popularity, the rate of turnover of users, and the degree of crowding. When the food category is taken as a standard, restaurants belonging to the same food category are placed in groups. When popularity is taken as a standard, stores are grouped according to popularity. When the rate of turnover is taken as a standard, stores are grouped according to the rate of turnover of users. When the degree of crowding is taken as a standard, stores are grouped according to the degree of crowding in the stores. Grouping by these standards is chiefly directed by the thinking on the store side toward improving the customer-drawing effect.

When restaurants that belong to the same food category are grouped, users can be introduced in order to restaurants in which vacant seating occurs by registering in the queue of a desired food group. In this way, the time that users must wait can be shortened. For the restaurants as well, the rate of turnover can be increased because users are successively introduced as seating becomes available.

In addition, users generally desire stores that are in nearby locations. When developed with objects over a wide area, the queue object control system can combine regional information to produce, for example, a store group of Chinese restaurants within Area A.

Users in some cases further desire seating for four persons, seating in the no-smoking section or seating with light air conditioning, or stores provided with child-care facilities. In queue control server 10, store group control unit 13 comprehends the current state information of each store and therefore, if such conditions are indicated at the time of registering in a queue, introduces stores that meet these conditions when seating becomes available.

When a group is divided into a group of stores having no-smoking seating and a group of stores with light air conditioning, the affiliation of a single store can be duplicated in these groups.

In addition, stores having a specific characteristic can be added to groups to augment the customer draw of the entire group.

As described in the foregoing explanation, a single store can belong to one or a plurality of groups.

Although the formation of store groups is normally realized by the operator of queue object control system 1, users can also form store groups. For example, as will be explained in the fourth embodiment, a user may form a store group according to the user's own preferences in place of store groups such as "Italian" and "Japanese" that have been prepared according to a fixed format.

To control reservation registrations that have been entered by means of user terminals 81 for each store group, storage unit 103 includes: group turn-waiting queue storage unit 113 for registering and storing the user information of registrants in turn-waiting queues; assignment/selection rule storage unit 114 for storing the assignment/selection rules for determining the turn-waiting queues to which users who have requested queue reservations should be assigned, and when seating becomes available in stores, the turn-waiting queues and the users that should be selected and assigned seating; store current state information storage unit 123 for storing the current state information of stores 40 within a group; store information summarization rule storage unit 133 for storing the rules for producing summary information from store current state information that has been stored according to objectives; and summary information storage unit 134 for storing the summary information that has been produced.

Data processor 102 includes: central processing unit 110 for collecting the processing of each unit; reservation request acceptance unit 111 for accepting reservation registration to a turn-waiting queue that has been entered from user terminal 81; reservation queue control unit 112 for analyzing the content of a reservation request and registering to a reservation queue according to assignment/selection rules that have been stored in assignment/selection rule storage unit 114, for altering registration content by means of prescribed conditions, and for eliminating registrations from the turn-waiting queue when vacant seating has been introduced to users of the turn-waiting queues; store current state information acceptance unit 121 for accepting store current state information that has been received from store terminals 41; store current state information control unit 122 for updating store current state information that is stored in store current state information storage unit 123 in accordance with the store current state information that has been accepted and for reading and transmitting store current state information as necessary; summary information production unit 131 for producing summary information such as vacant seating information from the store current state information according to objectives in accordance with rules for producing summary information that have been stored in store information summarization rule storage unit 133; and summary information dispatch unit 132 for both transmitting summary information that has been produced to user terminals 81 and reporting to reservation queue control unit 112.

Reservation request acceptance unit 111, upon receiving from user terminal 81 a queue reservation request that designates only a group, transmits to user terminal 81 a list having spaces for designating names of stores that belong to the group and desired conditions. Reservation queue control unit 112 both analyzes the content of the reservation request according to the content of the list that is returned from user terminal 81 and implements registration to a turn-waiting queue in accordance with assignment/selection rules. Reservation queue control unit 112 further, in accordance with assignment/selection rules, refers to the store current state information and causes the user information of the next registrant to be selected to be stored in the turn-waiting queue of group turn-waiting queue storage unit 113. Upon receiving a report of the occurrence of vacant seating from store current state information control unit 122 and the conditions relating to this vacant seating, reservation queue control unit 112 selects the registrant that corresponds to these conditions and reports to summary information control unit 131. Summary information production unit 131 produces summary information that conforms with the conditions in accordance with the store information summarization rules and then both transmits the produced summary information from summary information dispatch unit 132 to relevant user terminal 81 and reports to reservation queue control unit 112.

In the present embodiment, reservation queue control unit 112 eliminates the user information of the user from the turn-waiting queue when vacant seating has been introduced to that user of the turn-waiting queue. In other embodiments, the user information of the user is deleted when prescribed conditions are met. Alternatively, in other embodiments, each of the store terminals 41 may control the turn-waiting queues and transmit summary information to queue control server 10.

Queue manipulation unit 12 is made up from: reservation request acceptance unit 111, reservation queue control unit 112, group turn-waiting queue storage unit 113, and assignment/selection rule storage unit 114. Store group control unit 13 is made up from: store current state information acceptance unit 121, store current state information control unit 122, and store current state information storage unit 123. Summary information notification unit 14 is made up from: summary information production unit 131, summary information dispatch unit 132, store information summarization rule storage unit 133, and summary information storage unit 134.

Queue control server 10 operates under the control of a program. The control program for controlling the operation of each component of queue control server 10 may be recorded in a recording medium (not shown). Examples of the recording medium include an FD (flexible disk), a CD-ROM, and a semiconductor memory.

The processes that are realized by the control program include: a process for collectively controlling a plurality of queue objects as a group turn-waiting queue; a process for controlling whether any queue object of a queue object group is available for use; a process for receiving a request to register in a queue that is transmitted in from a user terminal to a queue object group and registering in a group turn-waiting queue; and a process for, when any queue object of a queue object group becomes available for use, selecting a user terminal that is registered in the group turn-waiting queue and transmitting to the user terminal that has been selected in the queue manipulation unit usability notification indicating that the queue object is available for use.

The control program is read from the recording medium to data processor 102. Data processor 102 operates in accordance with this control program that has been read. More specifically, in accordance with the control program, data processor 102 executes: a process for controlling a plurality of queue objects as a group turn-waiting queue; a process for receiving the usability states of queue objects from queue object terminals and controlling whether any queue object of a queue object group can be used; a process for receiving queue registration requests that have been transmitted in from user terminals to queue object groups, registering in group turn-waiting queues, and selecting user terminals that are registered in group turn-waiting queues when any queue object of a queue object group becomes available for use; and a process for transmitting usability notification for queue objects that have become available for use to the user terminals that have been selected by the queue object control unit.

The setting or modification of assignment/selection rules in queue manipulation unit 12 is normally carried out by the operator of queue object control system 1. The operator can give priority to users who are of value to the system and can preferentially assign users to stores that pay higher charges. More specifically, "first in-first out" is adopted as a general rule, but users that have been designated "good customers" (first-class customers) and people with specific membership registrations are raised in rank according to prescribed rules, good customers are given preference over users who have registered for the first time, and frequent users are raised in ranking at designated times. Alternatively, if a user who has registered at a specific store is found to be also registered in the turn-waiting queue of another store and, further, to be at the head of the line at the other store, the rank of that user is raised (the user is pulled to a specific store).

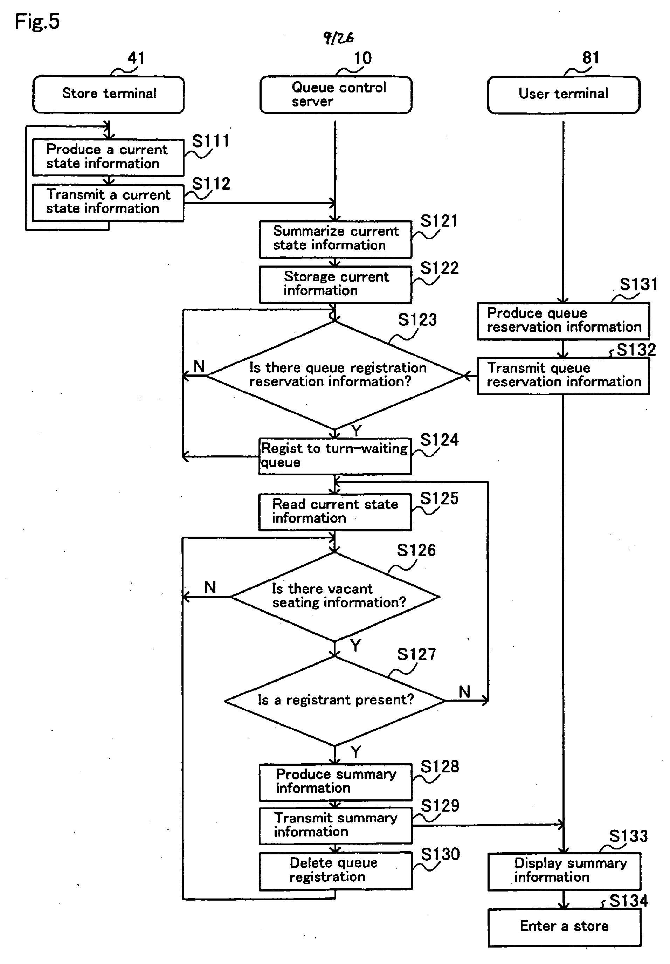

FIG. 5 is a flow chart showing the overall flow of processing of the queue object control system according to the first embodiment. The following explanation regards the details of the processing operations of the queue object control system according to the first embodiment with reference to FIGs. 1-5.

At the start of queue object control, based on information that has been supplied as input, store terminal 41 first updates and produces current state information such as the content of accommodations of a store, the content of offered services, and the current availability of seating, conditions relating to this seating, and the number of vacant seats (Step S111). Store terminal 41 next transmits the updated current state information to queue control server 10 (Step S112). The processes of these Steps S111 and S112 are repeated.

Queue control server 10 summarizes the updated current state information from each store terminal 41 (Step S121) and stores the updated current state information in store current state information storage unit 123 (Step S122). At the same time, queue control server 10 determines whether queue registration reservation information has been received from user terminals 81 (Step S123). User terminal 81 produces queue reservation information by means of the input from a user who desires a store service (Step S131) and transmits this queue reservation information that has been produced to queue control server 10 (Step S132).

Queue control server 10 receives the queue reservation information from user terminal 81 ("Y" in Step S123), and then performs registration in a turn-waiting queue (Step S124). Queue control server 10 further enters a standby state to receive queue registration reservation information from the next user terminal 81 (Step S123), and further, reads current state information (Step S125) and determines whether vacant seating information exists (Step S126). If there is vacant seating information ("Y" in Step S126), queue control server 10 determines whether this vacant seating corresponds to a queue registrant (whether the registrant is present) (Step S127), and if the registrant is not present, returns to Step S125 ("N" in Step S127). If the registrant is present ("Y" in Step S127), queue control server 10 produces summary information (Step S128) and transmits the summary information that has been produced to the relevant user terminal 81 (Step S 129). After sending the summary information, queue control server 10 deletes the queue registration of that registrant (Step S130).

User terminal 81 displays the summary information showing vacant seating that has been received from queue control server 10 (Step S133). The user of user terminal 81 recognizes the store having vacant seating based on the displayed summary information and then enters that store (Step S134).

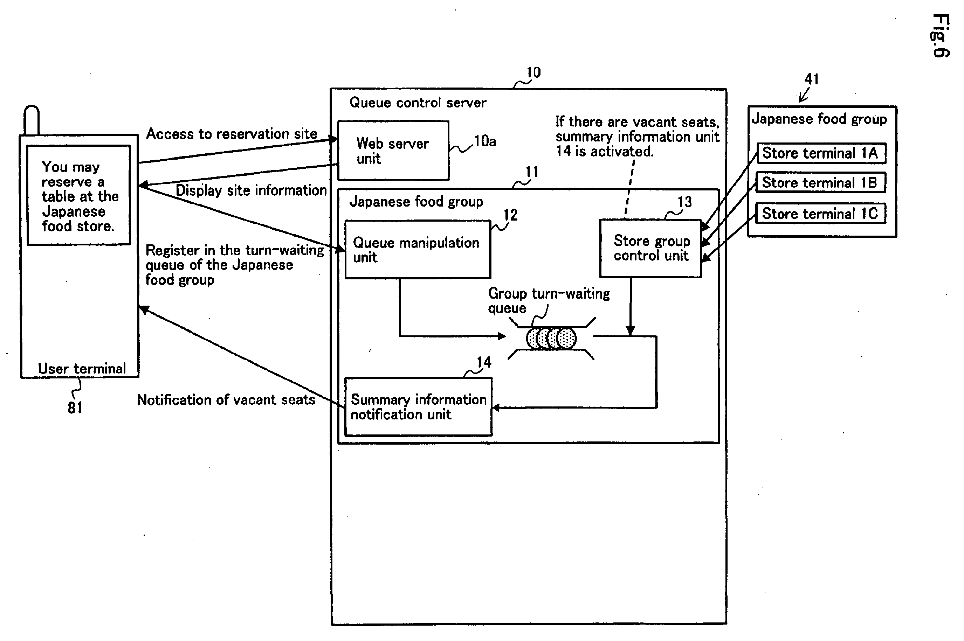

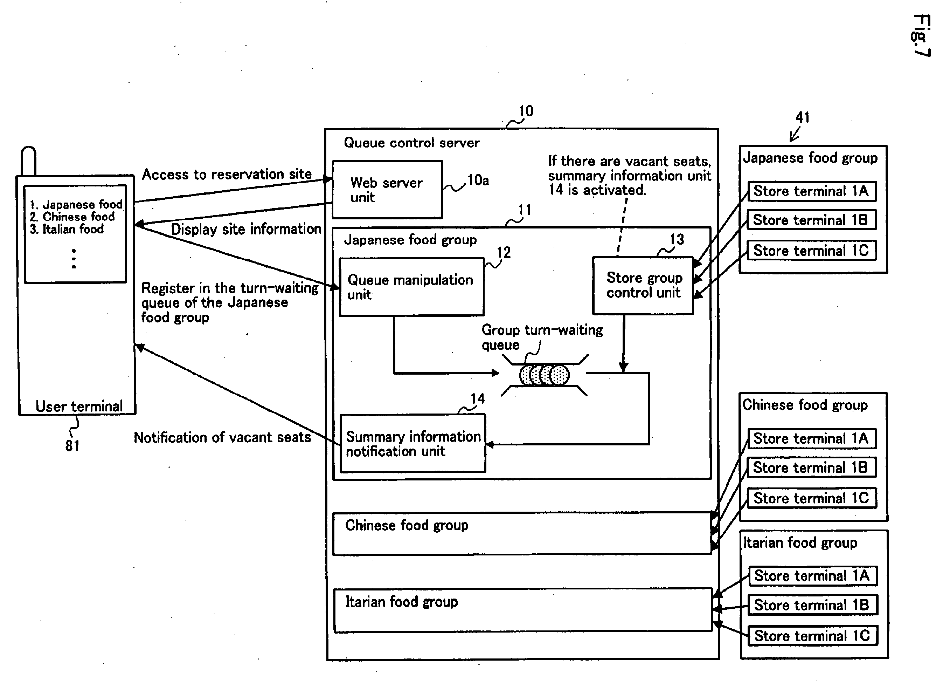

The following explanation regards an outline of the processing operation of the queue object control system according to the first embodiment. FIG. 6 is a schematic explanatory view of the queue object control system according to the first embodiment in which there is only one store group, and FIG. 7 is a schematic explanatory view of a queue object control system according to the first embodiment in which there is a plurality of store groups. Reference is next made to the schematic explanatory views of FIGs. 6 and 7.

In FIG. 6, user terminal 81 accesses a reservation site that is provided on the network by web server unit 10a of queue control server 10, whereby the screen of the reservation site is displayed on user terminal 81. The user registers in the turn-waiting queue of the Japanese Food group on the display screen of user terminal 81. In queue control server 10, queue manipulation unit 12 of store group 11 of the Japanese Food group registers the user of user terminal 81 in the group turn-waiting queue. When vacant seating information is supplied from store terminal 41 (store terminals 1A-1C) that belongs to the Japanese Food group to store group control unit 13, store group control unit 13 activates summary information notification unit 14 and reports the store summary information that contains vacant seating information to user terminal 81 that is next in order.

The example that is shown in FIG. 6 is an example that is provided with only store group 11, this being the Japanese Food group, but a plurality of store groups 11 is normally provided in queue control server 10 as shown in FIG. 7. In the example shown in FIG. 7, a Chinese group and an Italian group are provided in addition to the Japanese Food group, but the groups are not limited to these groups. Groups may be provided for different areas and for different types of food. Further, the Japanese Food group may be further divided into groups such as "no-smoking seating" and "chef's choice." In this case, a plurality of turn-waiting queues may be provided in parallel for different conditions within the Japanese Food group.

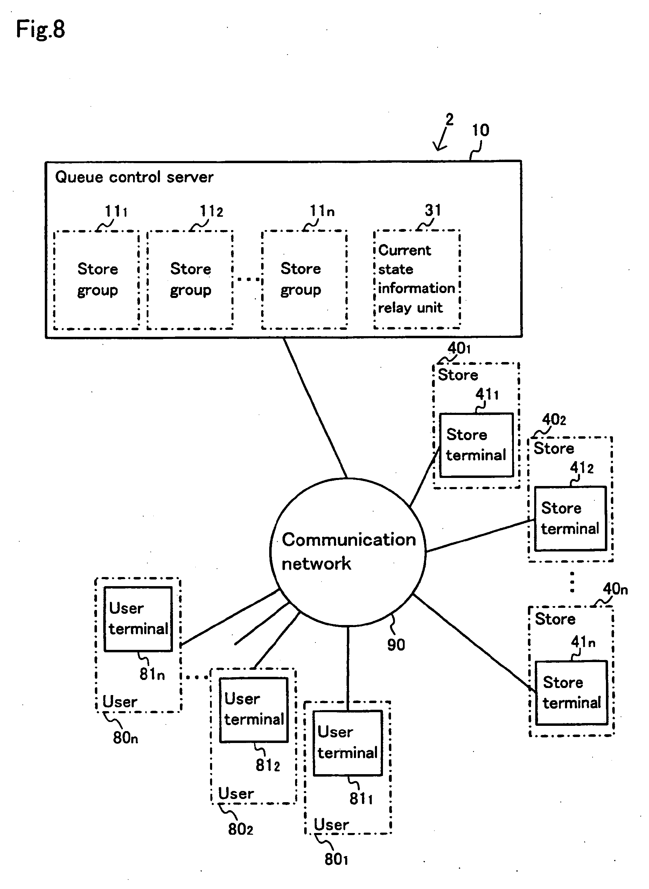

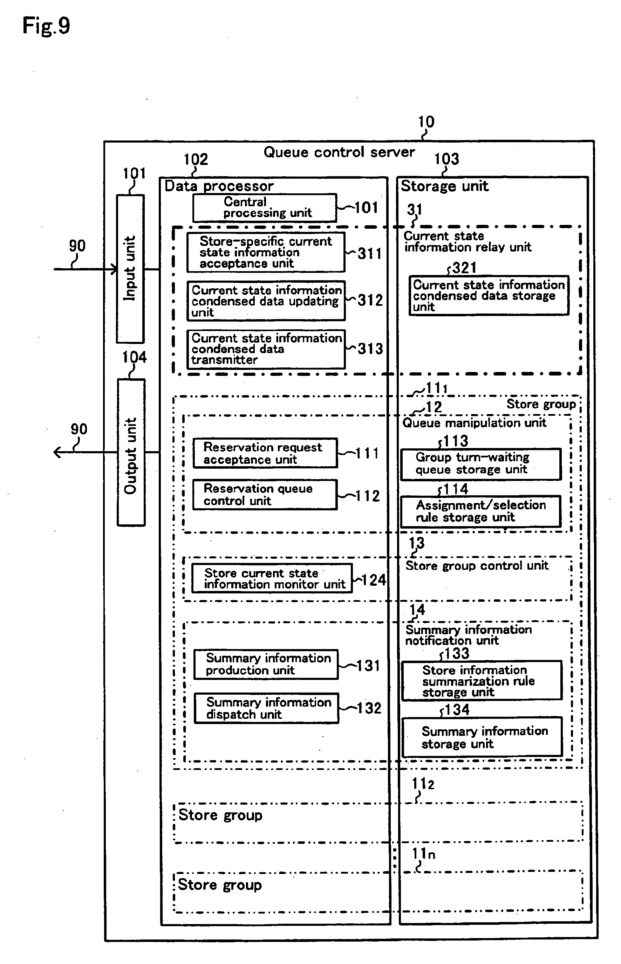

Explanation next regards the second embodiment of the present invention with reference to the accompanying figures. FIG. 8 is a block diagram showing a schematic view of the configuration of the queue object control system according to the second embodiment, and FIG. 9 is a block diagram showing a schematic view of the configuration of the queue control server that makes up a part of the queue object control system that is shown in FIG. 8.

Queue object control system 2 according to the second embodiment differs from the above-described system of the first embodiment in that current state information relay unit 31 is provided in queue control server 10. In the system of the first embodiment, store information is transmitted from each store terminal 41 to store group control unit 13 of store group 11 of queue control server 10 as shown in FIG. 7. In contrast, in queue object control system 2 of the second embodiment, all store information from each of store terminals 41 is collected in current state information relay unit 31 of queue control server 10 and then transmitted. Current state information condensed data updating unit 312 then updates the current state information condensed data of current state information condensed data storage unit 321 by means of the store information that has been accepted by store-specific current state information acceptance unit 311, and the updated data are transmitted from current state information condensed data transmitter 313 to store current state information monitor unit 124 of store group 11 that corresponds to stores 40. The configuration is otherwise equivalent to that of the system of the first embodiment. In FIG. 8 and FIG. 9, constructions that are the same as those of the system of the first embodiment are given the same reference numbers, and explanation regarding equivalent constructions is here omitted in the interest of avoiding redundant explanation.

Current state information relay unit 31 that is provided in queue control server 10 includes: store-specific current state information acceptance unit 311, current state information condensed data updating unit 312, and current state information condensed data transmitter 313 that are provided in data processor 102 and current state information condensed data storage unit 321 that is provided in storage unit 103. Store current state information monitor units 124 are provided in each of the store group control units 13 of store groups 11₁-11ₙ. Store current state information monitor unit 124 both monitors the changes in the current state information of affiliated stores in current state information relay unit 31 and reports the monitoring results to queue manipulation unit 12 and summary information notification unit 14.

Current state information control units 42 of store terminals 41 and store current state information monitor unit 124 and current state information relay unit 31 of queue control server 10 can be placed in a presence system having the architecture shown in RFC 2778 as a presentity that offers its own presence information, a watcher that watches this presence information, and an instant messaging and presence service that fetch presence information from the presentity and distribute this information to the watcher, respectively, and can be operated according to the architecture that is shown in RFC 2778. In this case, a request can be made such that notification is performed when a particular item of presence information changes, whereby the communication load can be reduced.

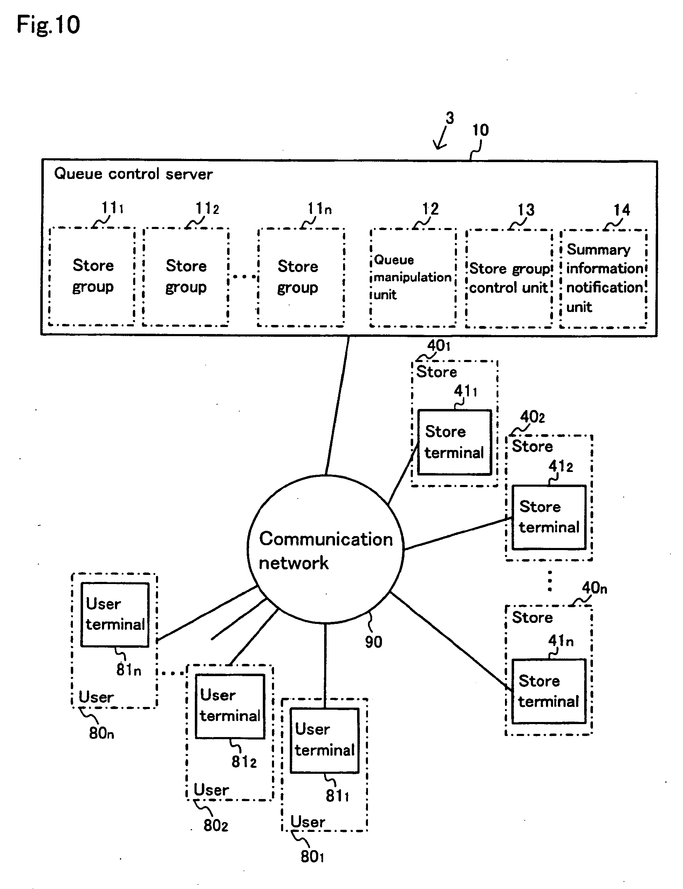

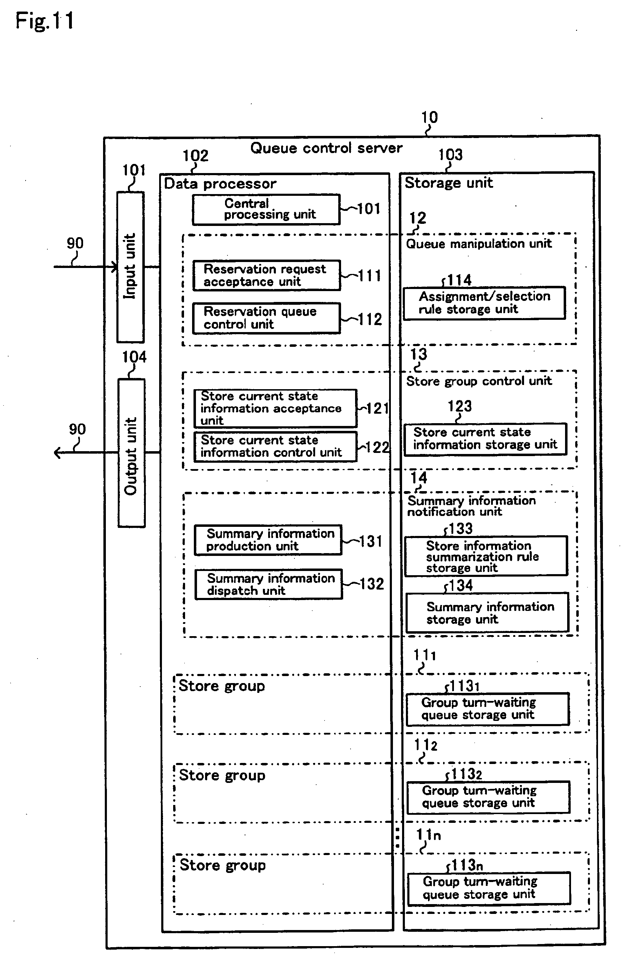

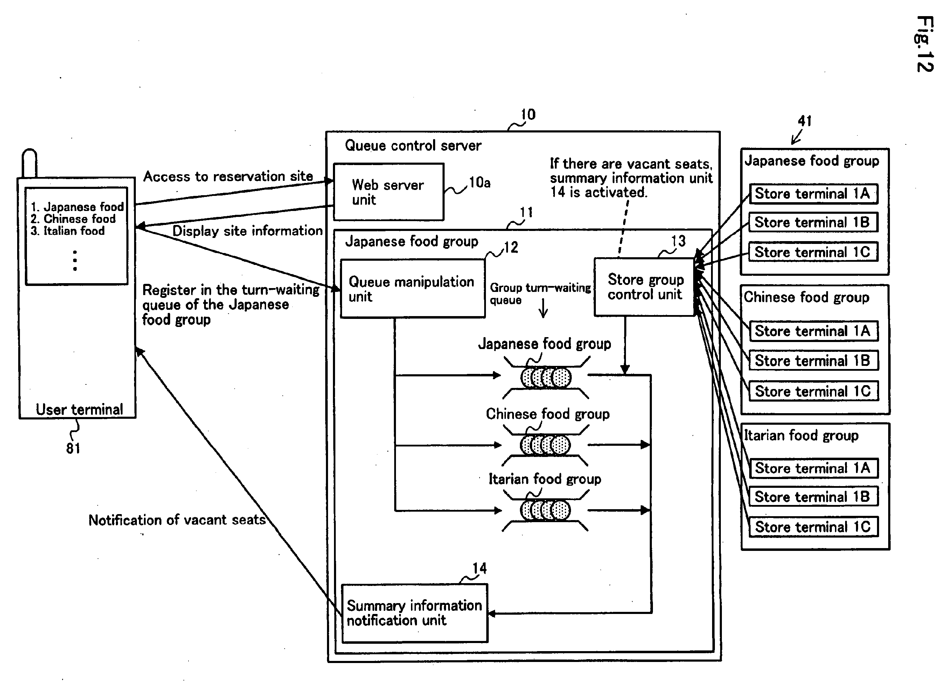

The following explanation regards the third embodiment of the present invention with reference to the accompanying figures. FIG. 10 is a block diagram showing a schematic view of the configuration of the queue object control system according to the third embodiment, and FIG. 11 is a block diagram showing a schematic view of the configuration of the queue control server that makes up a part of the queue object control system that is shown in FIG. 10. FIG. 12 is a schematic explanatory view of the queue control server that is shown in FIG. 11.

In the systems according to the first and second embodiments, queue manipulation unit 12, store group control unit 13, and summary information notification unit 14 were provided for each store group 11. In contrast, in the queue object control system according to the third embodiment, queue manipulation unit 12, store group control unit 13, and summary information notification unit 14 are provided in common for each store group 11, and only group turn-waiting queue storage units 113₁-113ₙ are provided in each of store groups 11₁-11ₙ. Store group control unit 13 may be current state information relay unit 31 of the second embodiment. The configuration is otherwise equivalent to that of the system of the first or second embodiment. In FIG. 10 and FIG. 11, constructions that are the same as those in the system of the first or second embodiment are given the same reference numbers. The operation of the queue object control system of the third embodiment is basically the same as the operation of the system of the first or second embodiment, and an explanation of the operation is therefore here omitted to avoid redundant explanation.

Although a Japanese Food group, a Chinese group, and an Italian group are shown in the example that is shown in FIG. 12, the groups are not limited to these categories. The groups may be provided according to area or food type. In addition, the Japanese Food group may be further divided into such groups as "chef's choice" and "no-smoking seating." In such a case, a plurality of turn-waiting queues may be provided for different conditions within the Japanese Food group.

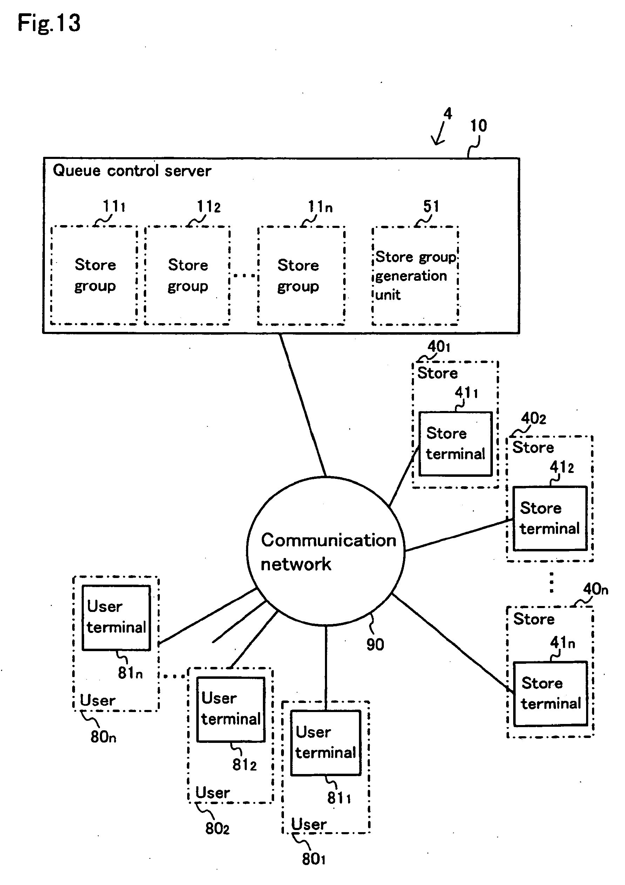

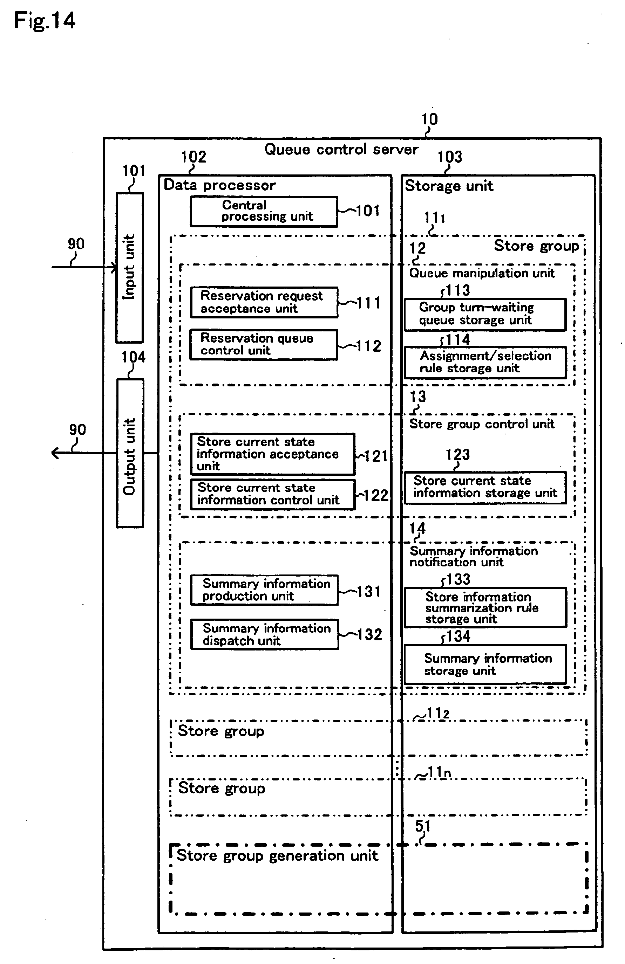

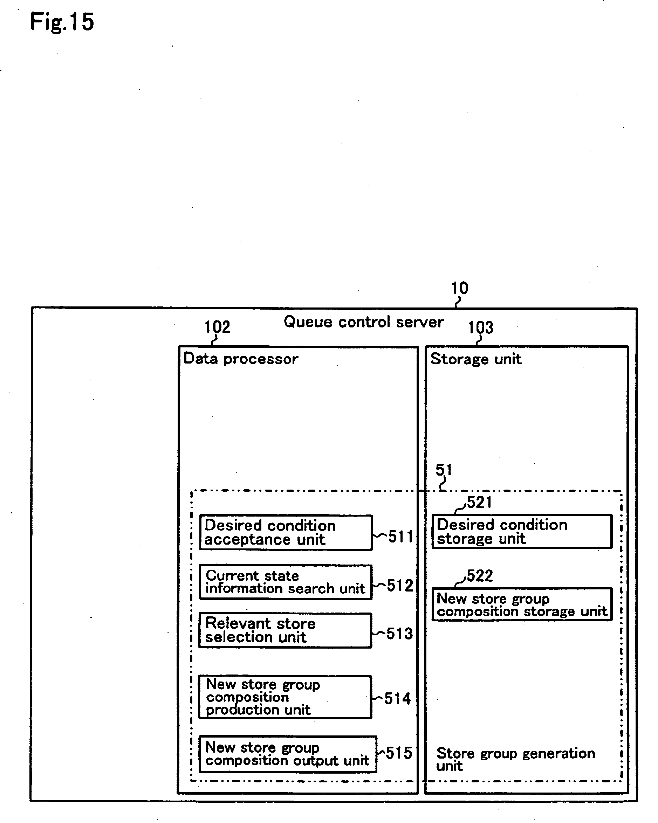

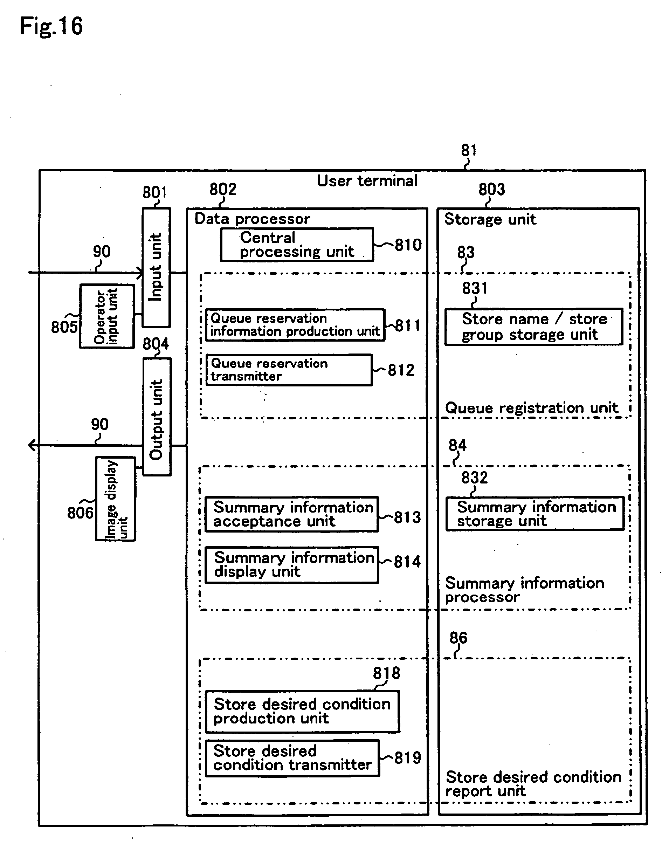

The following explanation regards the fourth embodiment of the present invention with reference to the accompanying figures. FIG. 13 is a block diagram showing a schematic view of the configuration of the queue object control system according to the fourth embodiment, and FIG. 14 is a block diagram showing a schematic view of the configuration of the queue control server that makes up a part of the queue object control system that is shown in FIG. 13. FIG. 15 is a block diagram showing a schematic view of the configuration of the store group generation unit of the queue control server that is shown in FIG. 14, and FIG. 16 is a block diagram showing a schematic view of the configuration of the user terminal that is shown in FIG. 13.

Queue object control system 4 of the fourth embodiment of the present invention enables the setting of new store groups that are users' favorite groups and that conform to store conditions that are desired by the users. Queue control server 10 includes store group generation unit 51, and user terminal 81 includes store desired condition report unit 86.

In queue object control system 4, store group generation unit 51 searches current state information of store terminals that correspond to desired conditions of stores that have been supplied from user terminal 81 and extracts stores that conform to the desired conditions. Store group generation unit 51 then generates a new store group that is a favorite group of the user and that relates to stores that conform to desired conditions. Queue object control system 4 differs from the above-described first embodiment in that store group generation unit 51 is provided in queue control server 10 and store desired condition report unit 86 is provided in user terminal 81. In the configurations that are shown in FIGs. 13 to 16, constructions that are the same as those in the first embodiment are given the same reference numbers. Explanation regarding the operation of identical constructions is omitted in the interest of avoiding redundant explanation. Further, in this embodiment, constructions for generating new store groups (store group generation unit 51 and store desired condition report unit 86) have been added to the system of the first embodiment, but this configuration can also be similarly applied to the systems of the second and third embodiments.

Typically, store groups that relate to restaurants or cafés are frequently grouped in food categories such as "Japanese Food," "sushi," "Chinese," and "Italian." In addition, brand-name stores or fashion boutiques at which turn-waiting queues can be expected may also be grouped. However, the conditions that users desire of stores includes limited conditions that cannot be handled by such typical groupings. Limited conditions may include, for example, the desire for "no-smoking seating" or "four-person seating," and the desire for child-care facilities. Using a store group that satisfies the condition "restaurants having no-smoking seating" eliminates the need for a user to check for no-smoking seating when entering a store.

A single store can belong to a plurality of store groups. For example, one store may belong to each of a store group in which no limited conditions are set regarding no-smoking seating or four-person seating, a store group having no-smoking seating, and a store group having four-person seating. In this case, the store terminal transmits the current state information corresponding to store groups to each store group. In this way, detailed conditions requested by a user can be accommodated.

The settings of a store group that satisfies the above-described limited conditions can also be generated according to the demands of stores, but making settings of store groups based on users' desires enables the setting of store groups that are favorable to users.

User terminal 81 includes: store desired condition production unit 818 for producing desired conditions of stores based on information that is supplied from users, and store desired condition transmitter 819 for transmitting the desired conditions that have been produced to store group generation unit 51 of queue control server 10. Store desired condition report unit 86 is made up from store desired condition production unit 181 and store desired condition transmitter 819.

Storage unit 103 of store group generation unit 51 includes: desired condition storage unit 521 for accumulating and storing desired conditions of stores that have been transmitted from user terminal 81, and new store group composition storage unit 522 for storing the composition of new store groups that have been generated.

Data processor 102 of store group generation unit 51 includes: desired condition acceptance unit 511 for accepting desired conditions of stores that are transmitted from user terminal 81; current state information search unit 512 for searching among the current state information of each store that has been accumulated for the information of stores that meet the desired conditions that have been accepted; relevant store selection unit 513 for selecting relevant stores based on the current state information that has been searched; new store group composition production unit 514 for producing the composition of a new store group; and new store group composition output unit 515 for supplying as output the new store group composition that has been produced according to prescribed procedures and building a new store group.

Store group generation unit 51 is composed of desired condition acceptance unit 511, current state information search unit 512, relevant store selection unit 513, new store group composition production unit 514, new store group composition output unit 515, desired condition storage unit 521, and new store group composition storage unit 522.

The following explanation regards the operation of queue object control system 4 according to the fourth embodiment. The operation other than the generation of new store groups is equivalent to that of the systems of the first to third embodiments, and redundant explanation is therefore here omitted.

In store group generation unit 51, when desired condition acceptance unit 511 accepts desired conditions of stores that have been transmitted from user terminal 81, current state information search unit 512 searches among the current state information of each store that has been accumulated for the information of stores that meet the desired conditions that have been accepted. Relevant store selection unit 513 then selects relevant stores based on the current state information that has been searched, new store group composition production unit 514 produces the new store group composition that is composed of the stores that have been selected, and new store group composition output unit 515 supplies as output the composition of the new store group that has been produced. Based on the output from this new store group composition output unit 515, a new store group is constructed in queue control server 10.

The following explanation regards the fifth embodiment of the present invention with reference to the accompanying figures.

In the systems of the first to third embodiments, the following operation is carried out in queue control server 10: When reservation queue control unit 112 stores, in group turn-waiting queue storage unit 113, the user information of a registrant that is to be selected next in accordance with store current state information according to prescribed rules and receives notification of the occurrence of vacant seating and conditions relating to this vacant seating from store current state information control unit 122, reservation queue control unit 112 selects a registrant that corresponds to these conditions and notifies summary information production unit 131. Summary information production unit 131 produces summary information that conforms to these conditions in accordance with the store information summarization rules and both transmits the store information summary that has been produced to the relevant user terminal 81 by way of summary information dispatch unit 132 and notifies reservation queue control unit 112. Reservation queue control unit 112, upon receiving notification from summary information production unit 131, deletes the user information of the relevant registrant from the turn-waiting queue.

In contrast to the above-described operation, the queue object control system according to the fifth embodiment is configured so as to delete the user information of the registrant from the turn-waiting queue after confirming that user terminal 81 has received the summary information. The configuration is otherwise equivalent to that of the system of the first to third embodiments.

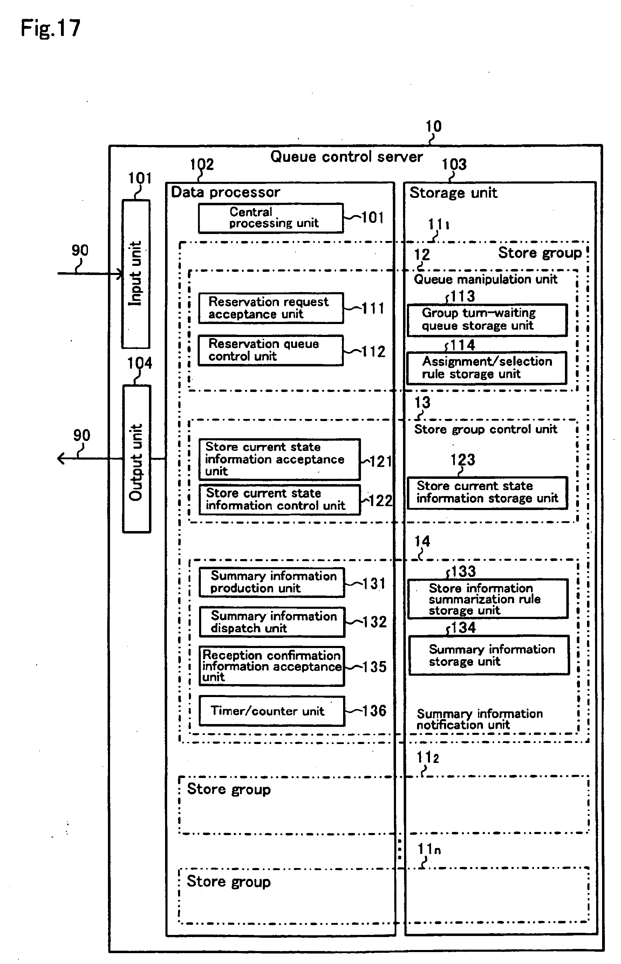

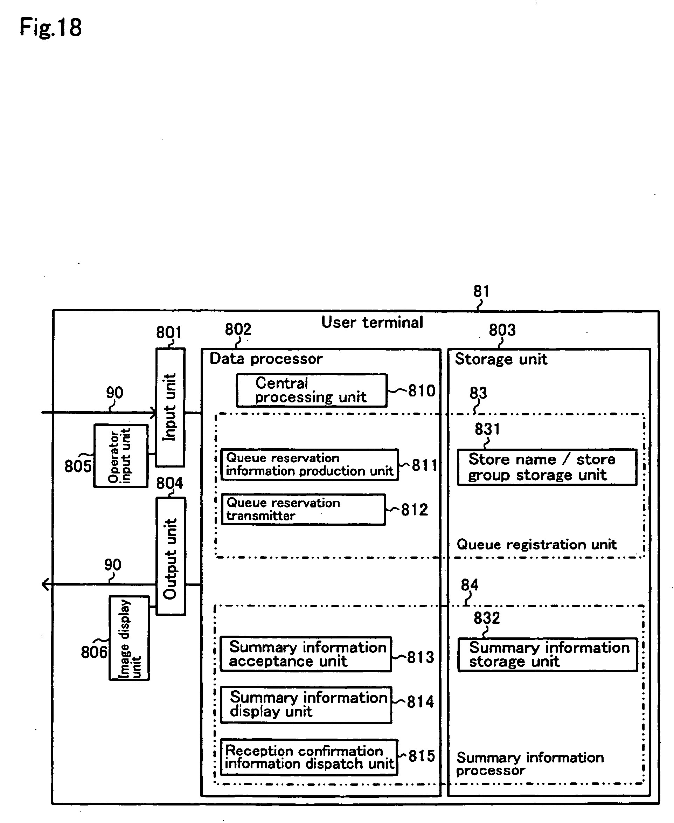

FIG. 17 is a block diagram showing a schematic view of the configuration of the queue control server that makes up a part of the queue object control system of the fifth embodiment. FIG. 18 is a block diagram showing a schematic view of the configuration of a user terminal that makes up a part of the queue object control system of the fifth embodiment. In FIGs. 17 and 18, constructions that are the same as those of the system of the first to third embodiments are given the same reference numbers. Explanation regarding constructions that are the same is here omitted in the interest of avoiding redundant explanation.

User terminal 81 includes reception confirmation information dispatch unit 815 for transmitting reception confirmation information to queue control server 10 when vacant seating information of the queue object in which queue registration has been performed is received as summary information in summary information acceptance unit 813 from queue control server 10.

Queue control server 10 includes in summary information notification unit 14: reception confirmation information acceptance unit 135 for accepting reception confirmation information from user terminal 81, and timer/counter unit 136. Timer/counter unit 136 counts the time that elapses from the transmission of summary information and the number of transmissions. Timer/counter unit 136 resets the count values upon receiving reception confirmation information from user terminal 81, and reports to reservation queue control unit 112 that transmission of summary information to user terminal 81 has been successful (successful communication). When the reception confirmation information cannot be received from user terminal 81 within a prescribed amount of time, timer/counter unit 136 resets the count values and summary information notification unit 14 resends the summary information to user terminal 81. Timer/counter unit 136 begins counting the time that elapses from the time of resending the summary information. This operation of resending summary information is repeated, and when the number of transmission attempts reaches a prescribed value, timer/counter unit 136 notifies reservation queue control unit 112 of the failure to transmit the summary information. Reservation queue control unit 112, having received notification of the success or failure of communication, deletes the user information of the relevant registrant from the turn-waiting queue of group turn-waiting queue storage unit 113.

According to the above-described operation, the communication of summary information to user terminal 81 (for example, the communication of the state of vacant seating) can be reliably performed, thereby providing a solution to the problem that registered users were made to wait needlessly. In addition, the problem of users not coming to stores due to the failure to notify users that vacant seating has become available can also be solved. As a result, the control of reservation queues can be more smoothly implemented.

The following explanation regards the sixth embodiment of the present invention with reference to the accompanying figures.

Although queue control server 10 controlled the reservation registrants of the turn-waiting queues of each store in the systems according to the first to third embodiments, the queue object control system according to the sixth embodiment is configured such that queue reservation registrants relating to a particular store are also controlled by that store terminal. The configuration is otherwise equivalent to that of the system of the first embodiment. In this case, explanation regards a case of applying the configuration of the sixth embodiment to the system of the first embodiment. The configuration of the sixth embodiment can be applied to the systems of the first or second embodiment.

The queue object control system according to the sixth embodiment has four modes, and explanation first regards the first mode.

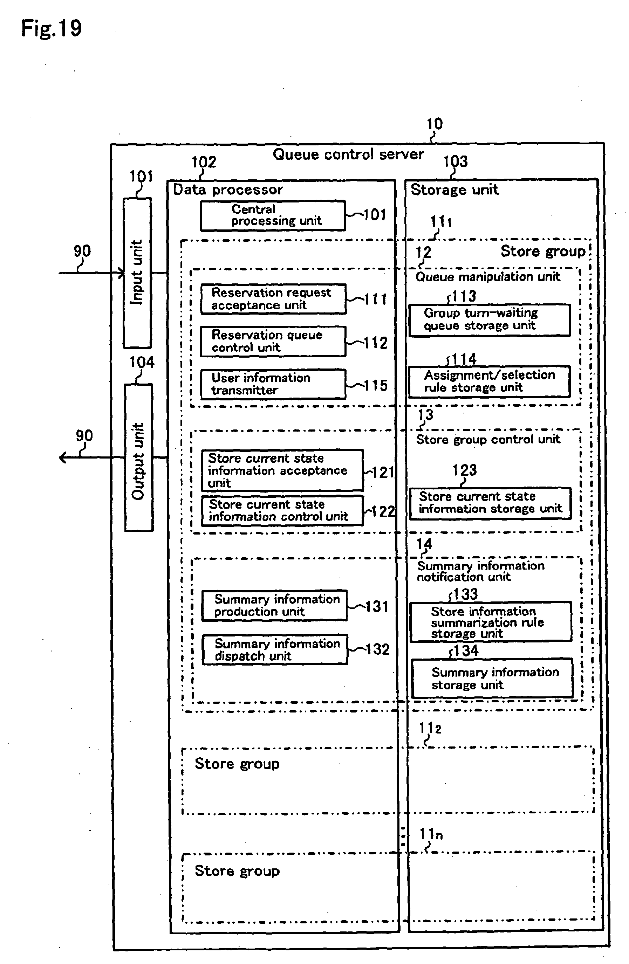

The configurations of each of the queue control server, store terminals, and user terminals that make up the queue object control system that is the first mode of the sixth embodiment are shown in FIGs. 19, 20, and 21, respectively. In FIGs. 19-21, constructions that are the same as those in the system of the first embodiment are given the same reference numbers, and explanation of identical constructions is here omitted in the interest of avoiding redundant explanation.

User terminal 81 includes store current state information observation unit 85 that is composed of store current state information condensed data acceptance unit 816 and store current state information condensed data display unit 817. Store current state information condensed data acceptance unit 816 accepts current state information condensed data that include vacant seating information of store terminal 41 by way of store group control unit 13 (current state information relay unit 31 when applied to the second embodiment) for each store group of queue control server 10. Store current state information condensed data display unit 817 displays on image display unit 806 the store current state information condensed data that have been accepted in store current state information condensed data acceptance unit 816. By means of this store current state information observation unit 85, a user is always able to directly observe on user terminal 81 the state of vacant seating of stores in which queue reservations have been made.

In addition, queue reservation object selection unit 815a is provided in queue registration unit of user terminal 81. Queue reservation object selection unit 815a designates either queue control server 10 or store terminal 41 as the transmission destination of the queue reservation information that has been produced in queue reservation information production unit 811. Queue reservation transmitter 812 transmits queue reservation information to a transmission destination that is designated by queue reservation object selection unit 815a. When making a queue reservation directly to store terminal 41, store terminal 41 is designated as the transmission destination by queue reservation object selection unit 815a, and queue reservation transmitter 812 transmits the queue reservation information directly to store terminal 41. In place of this direct transmission, queue reservation transmitter 812 may transmit the queue reservation information to store terminal 41 by way of store group control unit 13 (current state information relay unit 31 when applied to the second embodiment) of store group 11.

As shown in FIG. 19, user information transmitter 115 is provided in queue manipulation unit 12 of queue control server 10. When accepting reservations for use of one or more stores from user terminal 81, queue manipulation unit 12 both registers the user information (including information that can specify the user that has made the reservation for use) of the registrant in the turn-waiting queue until the store is available for use, and transmits information in which an identifier of the relevant store group has been conferred to the user information that has been registered to each store terminal 41 by way of user information transmitter 115.

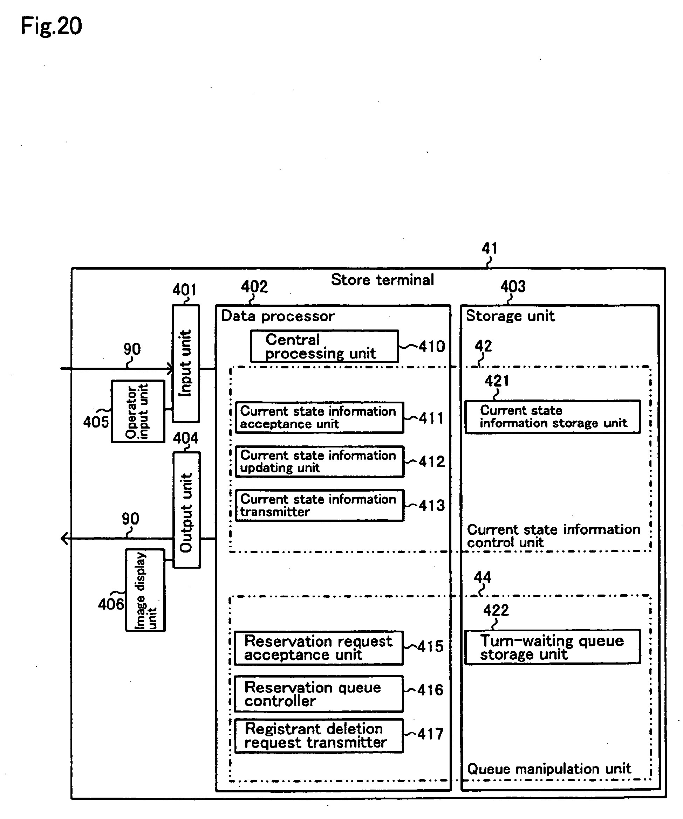

As shown in FIG. 20, store terminal 41 includes queue manipulation unit 44 that is composed of: reservation request acceptance unit 415, reservation queue controller 416, registrant deletion request transmitter 417, and turn-waiting queue storage unit 422. Reservation request acceptance unit 415 is a part for accepting use reservations directly from user terminals 81. Reservation queue controller 416 registers the user information to which the store group identifier has been attached that has been received from queue control server 10 and the user information that is acquired when accepting the use reservation directly from user terminals 81 in the turn-waiting queue of turn-waiting queue storage unit 422 and controls the turn-waiting queue until its own store can be used. Reservation queue controller 416 assigns use according to a prescribed procedure, and both deletes the user information of a user to whom vacant seating has been assigned and determines whether that user information is the user information to which the identifier of the store group has been attached. When the user information is the user information to which the identifier of the store group has been attached, reservation queue controller 416 transmits a request by way of registrant deletion request transmitter 417 to queue control server 10 to delete that user information.

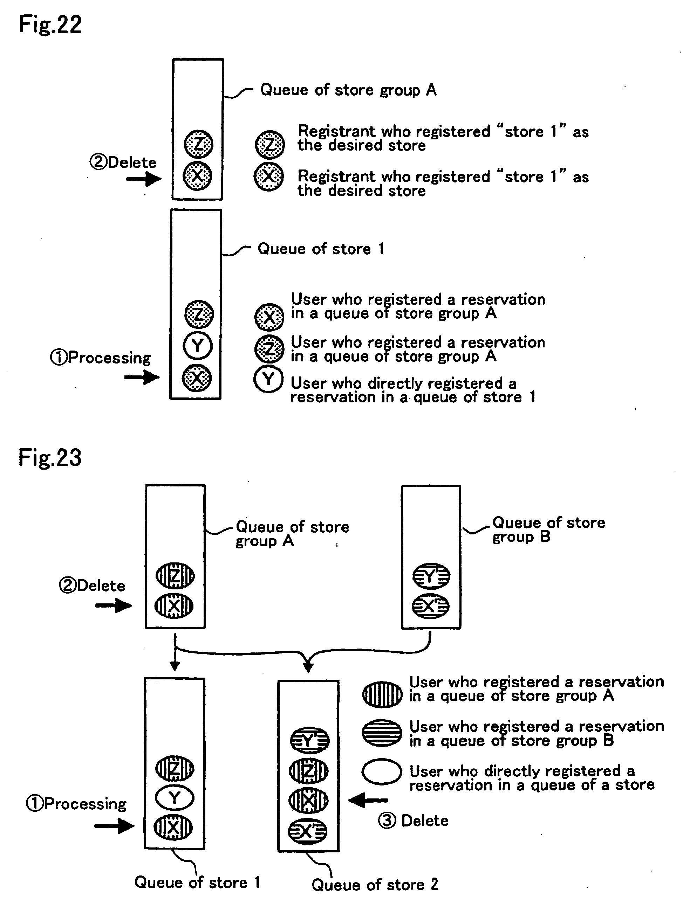

The following explanation regards the operation of the queue object control system according to the first mode. FIG. 22 is a schematic view for explaining the operation of the queue object control system of the first mode. FIG. 22 shows the registrant turn-waiting queue in queue manipulation unit 12 of store group A (store group 11₁ of queue control server 10) and the registrant turn-waiting queue in queue manipulation unit 44 of store terminal 41 that is established in store 1.

As shown in FIG. 20, store terminal 41 includes queue manipulation unit 44 and current state information control unit 42. Queue manipulation unit 44 includes reservation queue controller 416 and turn-waiting queue storage unit 422. In FIG. 22, the turn-waiting queue of store 1 schematically shows the turn-waiting queue that is stored in turn-waiting queue storage unit 422. Reservation queue controller 416 refers to the current state information and assigns vacant seating to registrants in the turn-waiting queue. In addition to this operation, reservation queue controller 416 determines the store groups to which the registrants belong based on the store group identifiers that are attached to the user information of the registrants in the turn-waiting queue.

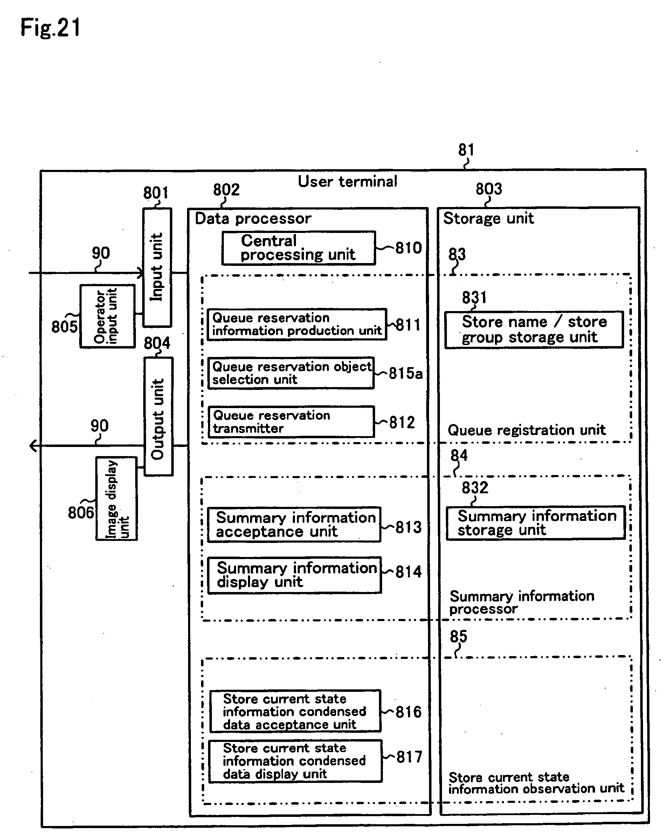

As shown in FIG. 21, user terminal 81 includes store current state information observation unit 85 in addition to queue registration unit 83 and summary information processor 84. Store current state information observation unit 85 enables observation of the current state information that includes vacant seating information of each store by way of store group control unit 13 (current state information relay unit 31 when applied to the second embodiment) of queue control server 10. Store group control unit 13 of store group A of queue control server 10 directly monitors the current state information that includes the vacant seating information of store 1 (when applied to the second embodiment, store group control unit 13 monitors the current state information that includes the vacant seating information of store 1 by way of current state information relay unit 31).

In the queue object control system of the first mode, store terminal 41 of store 1 issues the current state information "no vacant seating" in the initial state. It is here assumed that no registrants are registered in either of the queues of store terminal 41 of store 1 and store group A of queue control server 10 and that the queues are all in a vacant state. Users X, Y, and Z each use different user terminals. In this case, the user terminals of users X, Y, and Z are 81 X, 81 Y, and 81 Z, respectively.

(6-1-1) User X uses user terminal 81 X to register in the queue of store group A of queue control server 10. This queue registration is carried out through queue registration unit 83 of user terminal 81 X.

(6-1-2) In queue control server 10, queue manipulation unit 12 of store group A fetches the store lists that are currently being monitored from store group control unit 13 and transmits through user information transmitter 115 the user information of user X to which is attached the identifier of store group A to queue manipulation unit 44 of store terminal 41 of the store that is the reservation object and requests addition to the queue.

(6-1-3) User Y uses user terminal 81 Y to realize directly queue registration to store terminal 41-1 of store 1. This queue registration is carried out through queue registration unit 83 of user terminal 81Y.

(61-1-4) User Z uses user terminal 81 Z to carry out queue registration in store group A of queue control server 10. This queue registration is realized through queue registration unit 83 of user terminal 81 Z.

(6-1-5) In queue control server 10, the same operation as the above-described (6-1-2) is carried out for user Z.

(6-1-6) Store 1 enters the "vacant seating" state.

(6-1-7) Queue manipulation unit 44 of store terminal 41 of store 1 notifies store group control unit 13 (current state information relay unit 31 when applied to the second embodiment) of store group A of queue control server 10 that the store group to which the customer X at the head of the queue of turn-waiting queue storage unit 422 belongs is store group A.

(6-1-8) Store terminal 41 of store 1 transmits the current state information "vacant seating available" and "a user that belongs to the queue of store group A is at the head of the line of store 1" to store group control unit 13 (current state information relay unit 31 when applied to the second embodiment) of store group A of queue control server 10.

(6-1-9) Store group A of queue control server 10 transmits the summary information "store 1, vacant seating available" to user terminal 81 X of user X that is the registrant at the head of the queue. In addition, store terminal 41 and store group A of queue control server 10 delete the registration of user X from the turn-waiting queue. User terminal 81 X receives the summary information. User X, based on the summary information, enters store 1.

(6-1-10) Since the registration of user X has been deleted from the turn-waiting queue, at this point in time, user Z takes the head of the queue of store group A of queue control server 10.

(6-1-11) The queue of store terminal 41-1 has the order user Y and user Z starting from the head of the line.

(6-1-12) Store 1, having reverted to the "no seating available" state, changes to the "vacant seating available" state.

(6-1-13) Queue manipulation unit 44 of store terminal 41 of store 1 notifies store group control unit 13 (current state information relay unit 31 when applied to the second embodiment) of store group A of queue control server 10 that user Y at the head of the queue of turn-waiting queue storage unit 422 does not belong to any store group.

(6-1-14) Store terminal 41 of store 1 transmits to store group control unit 13 (current state information relay unit 31 when applied to the second embodiment) of store group A of queue control server 10 the current state information "vacant seating available" and "user Y that does not belong to the queue of a store group is at the head of the queue of store 1."

(6-1-15) Through store current state information observation unit 85 of user terminal 81 Y, user Y confirms the current state information that has been obtained through store group control unit 13 (current state information relay unit 31 when applied to the second embodiment) of store group A of queue control server 10. Based on this current state information, user Y recognizes that he has obtained the right to enter store 1 for which he has registered in a queue.

The following explanation regards another example of the operation of the queue object control system of the first mode.

FIG. 23 is a schematic view for explaining the operation of the queue object control system of the first mode. FIG. 23 shows the turn-waiting queue of registrants in queue manipulation unit 12 of store group A (store group 11₁ of queue control server 10), the turn-waiting queue of registrants in queue manipulation unit 12 of store group B (store group 11₂ of queue control server 10), the turn-waiting queue of registrants in queue manipulation unit 44 of the store terminal (hereinbelow noted as store terminal 41-1) that is established in store 1, and the turn-waiting queue of registrants in queue manipulation unit 44 of the store terminal (hereinbelow noted as store terminal 41-2) that is established in store 2.

Each of store terminals 41-1 and 41-2 includes queue manipulation unit 44 and current state information control unit 42. Queue manipulation unit 44 includes reservation queue controller 416 and turn-waiting queue storage unit 422. In FIG. 23, the turn-waiting queue of store 1 is a schematic representation of the turn-waiting queue that is stored in turn-waiting queue storage unit 422 of store terminal 41-1, and the turn-waiting queue of store 2 is a schematic representation of the turn-waiting queue that is stored in turn-waiting queue storage unit 422 of store terminal 41-2. Each of reservation queue controllers 416 of store terminals 41-1 and 41-2 refers to the current state information and then assigns vacant seating to the registrants of the turn-waiting queues, and further, determines the store groups to which the registrants belong based on the identifiers that are attached to the user information of the registrants of the turn-waiting queues.

User terminals 81 each include queue registration unit 83, summary information processor 84, and store current state information observation unit 85. Each store current state information observation unit 85 enables the observation of the current state information that includes the vacant seating information of each store by way of store group control unit 13 (current state information relay unit 31) of store group A of queue control server 10.

Store 1 belongs to store group A, and store 2 belongs to both store group A and store group B. Store group control unit 13 of store group A monitors the current state information that includes the vacant seating information of store 1 and store 2. Store group control unit 13 of store group B monitors the current state information that includes the vacant seating information of store 2.

In the initial state, each of store terminals 41-1 and 41-2 transmits the current state information "no seating available" to queue control server 10. It is here assumed that no registrants are registered in any of the queues of store terminals 41-1 and 41-2 and the queues of store group A and store group B of queue control server 10 and the queues are all vacant. Users X, X', Y, Y', and Z each use different user terminals. In this case, users X, X', Y, Y', and Z use user terminals 81 X, 81 X', 81 Y, 81 Y', and 81 Z, respectively.

(6-2-1) User X' uses user terminal 81 X' to make a queue registration in store group B of queue control server 10. This queue registration is realized through queue registration unit 83 of user terminal 81 X'.

(6-2-2) Queue manipulation unit 12 of store group B of queue control server 10 fetches the lists of stores that are currently monitored from store group control unit 13, transmits to queue manipulation unit 44 of store terminal 41-2 of store 2 the user information of user X' to which is attached the identifier of store group B through user information transmitter 115, and requests addition to the queue.

(6-2-3) User X uses user terminal 81 X to carry out queue registration in store group A of queue control server 10. This queue registration is carried out through queue registration unit 83 of user terminal 81 X.

(6-2-4) Queue manipulation unit 12 of store group A of queue control server 10 fetches the lists of stores that are currently monitored from store group control unit 13, transmits the user information of user X to which the identifier of store group A has been attached through user information transmitter 115 to each queue manipulation unit 44 of store terminal 41-1 of store 1 and store terminal 41-2 of store 2, and requests addition to queues.

(6-2-5) User Y uses user terminal 81 Y to carry out direct queue registration to store terminal 41-1 of store 1. This queue registration is realized through queue registration unit 83 of user terminal 81 Y.

(6-2-6) User Z uses user terminal 81 Z to carry out queue registration to store group A of queue control server 10. This queue registration is realized through queue registration unit 83 of user terminal 81 Z.

(6-2-7) Queue manipulation unit 12 of store group A of queue control server 10 fetches the store lists that are currently monitored from store group control unit 13, transmits through user information transmitter 115 the user information of user Z to which the identifier of store group A has been attached to each queue manipulation unit 44 of store terminal 41-1 of store 1 and store terminal 41-2 of store 2, and requests addition to the queues.

(6-2-8) User Y' uses user terminal 81 Y' to carry out queue registration to store group B of queue control server 10. This queue registration is realized through queue registration unit 83 of user terminal 81Y'.

(6-2-9) Queue manipulation unit 12 of store group B of queue control server 10 fetches the store lists that are currently monitored from store group control unit 13, transmits through user information transmitter 115 the user information of user Y' to which the identifier of store group B has been attached to queue manipulation unit 44 of store terminal 41-2 of store 2 and requests addition to the queue.

(6-2-10) At this point in time, the turn-waiting queue of store 1 has the order, starting from the head of the queue, of: user X who belongs to store group A, user Y who does not belong to any store group, and user Z who belongs to store group A. The turn-waiting queue of store 2 has the order, starting from the head of the queue, of: user X' who belongs to store group B, user X who belongs to store group A, user Z who belongs to store group A, and user Y' who belongs to store group B. The turn-waiting queue of store group A has the order, starting from the head of the queue, of: user X who belongs to store group A, and user Z who belongs to store group A. The turn-waiting queue of store group B has the order, starting from the head of the queue, of: user X' who belongs to store group B, and user Y' who belongs to store group B.

(6-2-11) Store 1 enters the state "vacant seating available."

(6-2-12) Queue manipulation unit 44 of store terminal 41-1 of store 1 notifies store group control unit 13 (current state information relay unit 31 when applied to the second embodiment) of store group A of queue control server 10 that the store group, to which belongs user X who is at the head of the queue of turn-waiting queue storage unit 422, is store group A.

(6-2-13) Store terminal 41-1 of store 1 transmits the current state information "vacant seating available" and "a user that belongs to the queue of store group A is at the head of the queue of store 1" to store group control unit 13 (current state information relay unit 31 when applied to the second embodiment) of store group A of queue control server 10.

(6-2-14) Store group A of queue control server 10 transmits the summary information "store 1, vacant seating available" to user terminal 81 X of user X that is the registrant at the head of the queue. In addition, store group A of queue control server 10, store terminal 41-1, and store terminal 41-2 delete the registration of user X from the turn-waiting queue. User terminal 81 X receives the summary information. User X, based on the summary information that has been received, enters store 1.

(6-2-15) Since the registration of user X has been deleted from the turn-waiting queue, user Z is now at the head of the queue of store group A of queue control server 10.

(6-2-16) The queue of store terminal 41-1 is now in the order, starting from the head of the queue, of: user Y who does not belong to any group, and user Z who belongs to store group A. The queue portion of store terminal 41-2 is now in the order, starting from the head of the queue, of: user X' who belongs to store group B, user Z who belongs to store group A, and user Y' who belongs to store group B.

(6-2-17) Store 1 enters the state "no seating available" and then changes to the state "vacant seating available."

(6-2-18) Queue manipulation unit 44 of store terminal 41-1 of store 1 notifies each store group control unit 13 (current state information relay unit 31 when applied to the second embodiment) of store group A and store group B of queue control server 10 that user Y at the head of the queue portion of turn-waiting queue storage unit 422 does not belong to any store group.

(6-2-19) Store terminal 41-1 of store 1 transmits the current state information "vacant seating available" and "user Y that does not belong to the queue of a store group is at the head of the queue of store 1" to each store group control unit 13 (current state information relay unit 31 when applied to the second embodiment) of store group A and store group B of queue control server 10.

(6-2-20) Through store current state information observation unit 85 of user terminal 81 Y, user Y obtains the current state information that has been obtained through each store group control unit 13 (current state information relay unit 31 when applied to the second embodiment) of store group A and store group B of queue control server 10. Based on this obtained current state information, user Y learns that he has obtained the right to enter registered store 1.

The following explanation regards the second mode of the sixth embodiment. The second mode is similar to the first mode but differs on the following points: In the first mode, queue manipulation unit 12 of a store group, upon accepting a reservation request for stores of one or more locations from user terminal 81, registers the user information of the registrant in the turn-waiting queues until the stores become available for use. Queue manipulation unit 12 then transmits, through user information transmitter 115 and to each of the store terminals 41, information in which the identifier of its own store group is attached to the user information of the registrant. In the second mode, queue manipulation unit 12 transmits only the identifier of its own store group to each of store terminals 41 and does not transmit user information of the registrant. In the store terminals 41, the reception of the identifier of the store group indicates that a registrant who has performed queue registration in the store group of queue control server 10 is in the turn-waiting queue.

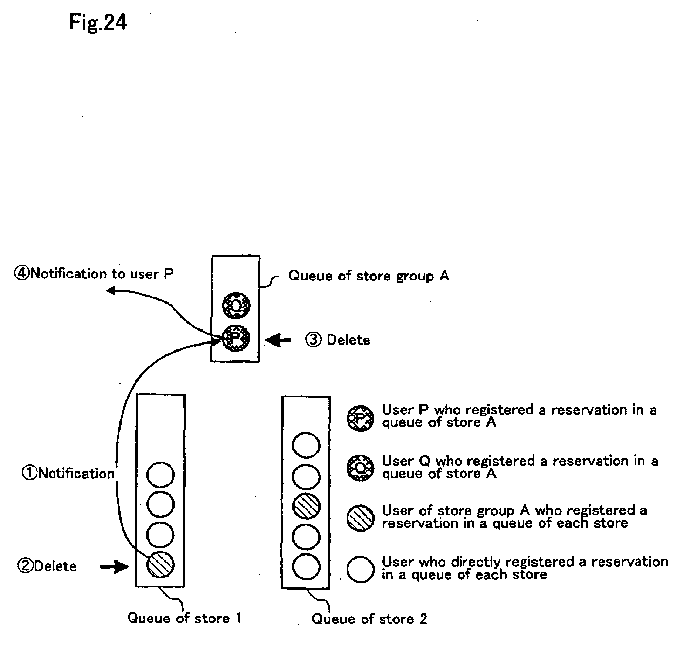

FIG. 24 is a schematic view for explaining the operation of the queue object control system according to the second mode. FIG. 24 shows: the turn-waiting queue of the registrants in queue manipulation unit 12 of store group A (store group 11₁ of queue control server 10); the turn-waiting queue of the registrants in queue manipulation unit 44 of the store terminal (hereinbelow noted as store terminal 41-1) that is established in store 1; and the turn-waiting queue of registrants in queue manipulation unit 44 of the store terminal (hereinbelow noted as store terminal 41-2) that is established in store 2.

In the turn-waiting queue of store 1, three users who do not belong to any store group follow the identifier of store group A. In the turn-waiting queue of store 2, two users who do not belong to any store group are followed by the identifier of store group A, and after this identifier, by two users who do not belong to any store group. In the turn-waiting queue portion of store group A, the order is: user P who is queued in the turn-waiting queue portion of store terminal 41-1 of store 1, and user Q who is queued in the turn-waiting queue of store terminal 41-2 of store 2.

When vacant seating becomes available in store 1, in which a user who carries only the identifier of a store group is at the head of the queue, queue manipulation unit 44 of store terminal 41-1 of store 1 deduces the store group to which the user at the head of the queue belongs based on the identifier. Store terminal 41-1 of store 1 transmits to store group control unit 13 (current state information relay unit 31 when applied to the second embodiment) of store group A of queue control server 10 the current state information "vacant seating available" and "a user belonging to the queue portion of store group A is at the head of the queue portion of store 1."

Store group A of queue control server 10 transmits through summary information dispatch unit 132 the summary information "store 1, vacant seating available" to user terminal 81 of user P that is the registrant located at the head of the queue portion. In addition, store group A deletes the registration of user P, and store terminal 41-1 deletes the identifier of store group A from the turn-waiting queue portion. User terminal 81 receives the summary information. User P, based on the summary information that has been received, enters store 1.

The following explanation regards the third mode of the sixth embodiment.

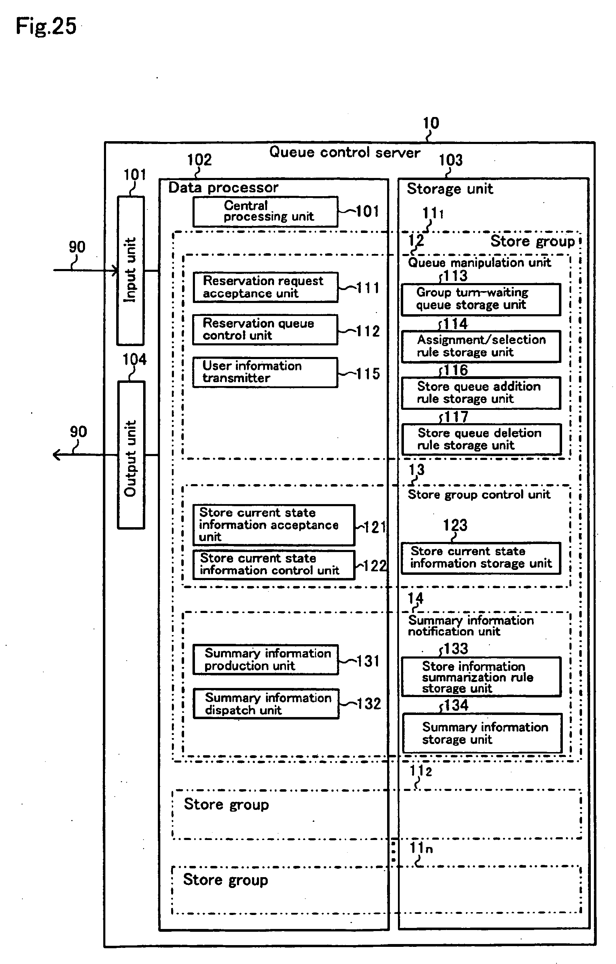

FIG. 25 is a block diagram showing a schematic view of the configuration of the queue control server that makes up a part of the queue object control system according to the third mode. In the second mode, the order of the transfer of queue reservation registrants, for whom control was transferred from queue control server 10 to queue manipulation unit 44 of each store terminal 41, was fixed in queue manipulation unit 44 of each store terminal 41. In addition, the store groups of queue control server 10 reported to each store terminal 41 only identifiers that indicate store groups, and in each store terminal 41 the order was established by the identifiers. By increasing or decreasing the identifiers, the order alone can be secured in a separate frame from specific users. In the third mode, store groups of queue control server 10 are configured to allow addition and reduction in the order as separate frames.

Queue control server 10 of the queue object control system according to the third mode includes store queue addition rule storage unit 116 and store queue deletion rule storage unit 117 in queue manipulation unit 12. Store queue addition rule storage unit 116 stores store queue addition rules, and store queue deletion rule storage unit 117 stores store queue deletion rules. Reservation queue control unit 112 is able to add or delete the identifiers in queue manipulation unit 44 of each store terminal 41 in accordance with these rules.

The store queue addition rules are rules for adding frames of users having only group information to each store. One example of a store queue addition rule is a rule for adding one identifier to each store, changing the number of identifiers added to each store according to the number of users in the queue of each store group, and changing the number of identifiers added according to the number of users of the queue of each store. The store queue deletion rules are rules for deleting from each store frames of users having only group information. One example of a store queue deletion rule is a rule for deleting frames of users having only group information that have been added to each store according to the number of users of the queue portion of a store group, and deleting frames of users having only group information that have been added to each store according to the number of users of the queue of each store. In this case, both store queue addition rule storage unit 116 and store queue deletion rule storage unit 117 have been provided, but a configuration is also possible in which only one of these storage units is provided.

The following explanation regards the fourth mode of the sixth embodiment.

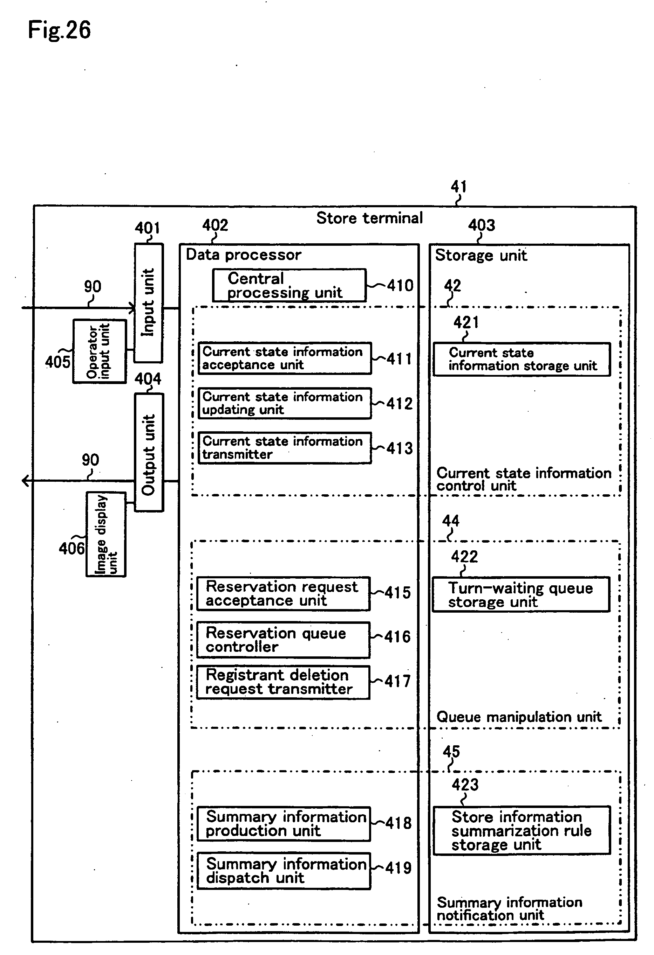

FIG. 26 is a block diagram showing a schematic view of the configuration of the store terminal that makes up a part of the queue object control system according to the fourth mode. In the first to third modes, a user that made a direct reservation registration to store terminal 41 directly observed, through store current state information observation unit 85 of user terminal 81, the occurrence of vacant seating of a store in which a reservation was registered. In the fourth mode, summary information that includes vacant seating information is further transmitted from store terminal 41 to user terminal 81.

Store terminal 41 has a configuration in which summary information notification unit 45 is added to the configuration shown in FIG. 20. Summary information notification unit 45 has the same configuration as summary information notification unit 14 of queue control server 10 and performs the same operation. Summary information notification unit 45 includes in storage unit 403 store information summarization rule storage unit 423 for storing rules for producing summary information from store current state information according to objectives, and includes in data processor 402 summary information production unit 418 and summary information dispatch unit 419. Summary information production unit 418 produces summary information according to objectives from store current state information in accordance with the rules that are stored in store information summarization rule storage unit 423. Summary information dispatch unit 419 transmits summary information that has been produced in summary information production unit 418 to user terminal 81 according to objectives, and further, notifies reservation queue controller 416.

In store terminal 41, when vacant seating occurs and becomes available for use in its own store, queue manipulation unit 44 assigns the use of the store to a registrant of the turn-waiting queue based on prescribed use assignment. Summary information production unit 418 then produces summary information that indicates that vacant seating has occurred in the store and can be used, and summary information dispatch unit 419 then transmits this summary information that has been produced to summary information processor 84 of user terminal 81 of the registrant to which the vacant seating has been assigned. In user terminal 81, store current state information observation unit 85 not only fetches the vacant seating information of the store, but also directly receives the notification as summary information, whereby the vacant seating information can be rapidly and reliably provided to the user.

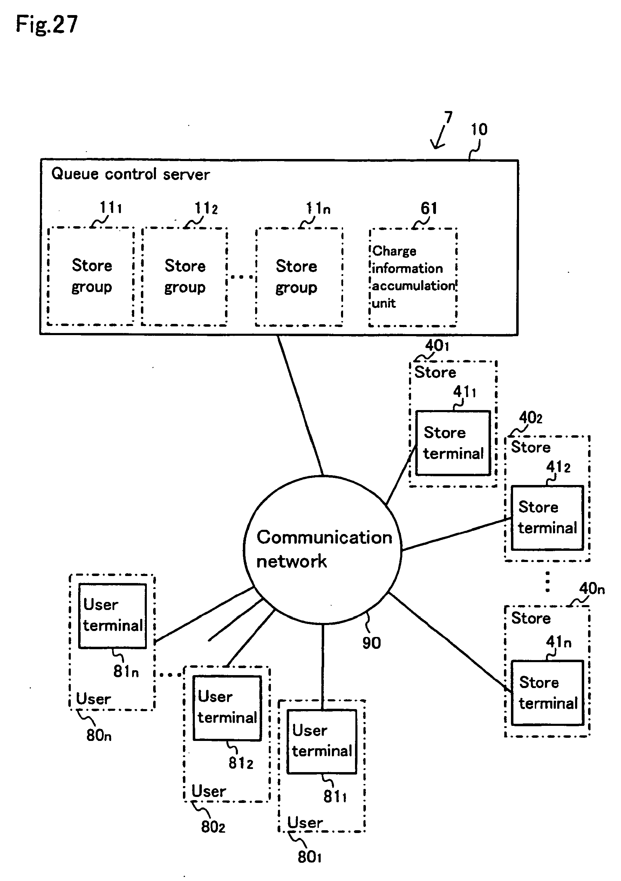

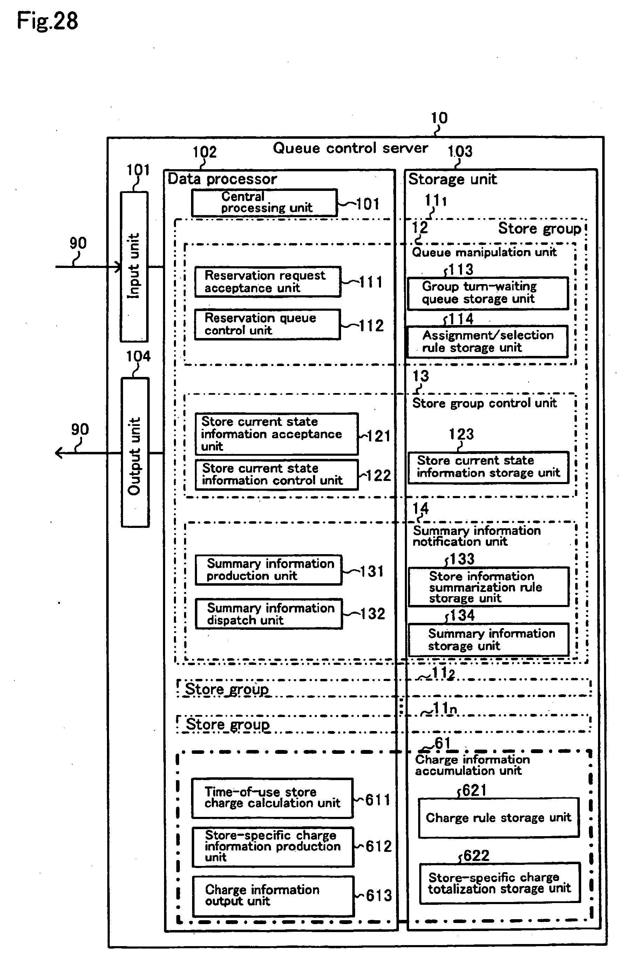

The following explanation regards the seventh embodiment of the present invention with reference to the accompanying figures. FIG. 27 is a block diagram showing a schematic view of the configuration of the queue object control system according to the seventh embodiment. FIG. 28 is a block diagram showing a schematic view of the configuration of the queue control server shown in FIG. 27.

Queue control server 10 of queue object control system 7 of the seventh embodiment is provided with charge information accumulation unit 61. Queue object control system 7 is configured such that charges for using the system are paid from the store to the operator of the store group in accordance with charge rules for charging users that have become the registrants of a reservation queue according to the use of a store. Other than the provision of charge information accumulation unit 61 in queue control server 10, queue object control system 7 has the same configuration as the system of the first embodiment. In FIG. 27 and FIG. 28, constructions that are the same as constructions in the first embodiment are given the same reference numbers, and explanation regarding constructions that are the same is here omitted in the interest of avoiding redundant explanation. The configuration of this charge information accumulation unit 61 can also be applied to the systems of the second to sixth embodiments.

Charge information accumulation unit 61 includes: charge rule storage unit 621 and store-specific charge totalization storage unit 622 in storage unit 103, and includes time-of-use store charge calculation unit 611, store-specific charge information production unit 612, and charge information output unit 613 in data processor 102.

Predetermined charge rules are stored in charge rule storage unit 621. Store-specific charge totalization data that are produced and updated by store-specific charge information production unit 612 are stored in store-specific charge totalization storage unit 622. Time-of-use store charge calculation unit 611, upon receiving from reservation queue control unit 112 information that includes a store identifier and that indicates that a reservation queue registrant has been introduced to a store and the registrant deleted, calculates the charge amount for that store in accordance with charge rules that are stored in charge rule storage unit 621. Store-specific charge information production unit 612 updates the store-specific charge totalization data that are stored in store-specific charge totalization storage unit 622 by means of the charge amount that has been calculated by time-of-use store charge calculation unit 611. Charge information output unit 613 supplies the store-specific charge totalization data as output according to prescribed rules.

Time-of-use store charge calculation unit 611 may calculate charges by means of assignment information through store identifiers from summary information production unit 131. The store-specific charge totalization data are usually transmitted to the terminal (not shown) of the operator of queue object control system 7.

The provision of charge rules enables the operator of queue object control system 7 to perform the control of store groups 11 as a business for intermediating customers and services. The charge rules are normally set by the operator of the queue object control system 7.

In addition, the operator of the customer intermediary service can also set higher charges for specific stores. In this case, charge rules that include information regarding stores for which higher charges have been set are stored in charge rule storage unit 621. Thus, when there is a plurality of stores with vacant seating, operation can be carried out in which summary information production unit 131 refers to the charge rules that have been stored in charge rule storage unit 621, preferentially selects stores that pay higher charges, and produces corresponding summary information. Reservation queue control unit 112 then preferentially introduces these stores.

The following explanation regards the operation of queue object control system 7. Other than the charge operations, the operation of this embodiment is the same as that of the first to sixth embodiments, and this explanation is therefore here omitted. In queue control server 10, time-of-use store charge calculation unit 611 of charge information accumulation unit 61 receives information from reservation queue control unit 112 indicating that a reservation queue registrant has been introduced to a store and deleted, whereupon time-of-use store charge calculation unit 611 calculates the amount of charges for that store in accordance with charge rules for a prescribed store that are stored in charge rule storage unit 621. Store-specific charge information production unit 612 next updates the store-specific charge totalization data that are stored in store-specific charge totalization storage unit 622 based on the charge amount that has been calculated by time-of-use charge calculation unit 611. Charge information output unit 613 then transmits the store-specific charge totalization data that have been stored in store-specific charge totalization storage unit 622 to the terminal of the operator of queue object control system 7 according to a prescribed procedure.

While preferred embodiments of the present invention have been described using specific terms, such description is for illustrative purposes only, and it is to be understood that changes and variations may be made without departing from the scope of the following claims.

## Claims

1. A control serve (10), said control server being connected by way of a network to queue object terminals (41) that are established at queue objects (40) and to user terminals (81) for making queue registrations for making reservations of said queue objects; said control server both accepting queue registrations from said user terminals and controlling turn-waiting queues at said queue objects based on the queue registrations that have been accepted wherein said queue objects have been sorted according to prescribed categories in group units in such a manner that a plurality of group turn-waiting queues is defined said control server comprising:
- a queue object control unit (13) for controlling the state of usability of queue objects that belong to a queue object group based on states of usability of said queue objects (40) that are supplied from said queue object terminals (41);
- a queue manipulation unit (12) for both, upon receiving a queue registration request 15 from a user terminal to a queue object group, registering user information based on the queue registration request to a group turn-waiting queue of the queue object group and, upon receiving notification from said queue object control unit indicating that a queue object that belongs to a queue object group has become usable, selecting a user terminal that is to 20 be a transmission destination based on user information that has been registered in the group turn-waiting queue of said queue object group; and
- a usability notification unit (14) for transmitting notification of usability regarding said queue object that has become usable to the user terminal that has been selected by said queue manipulation unit.

2. A control server according to claim 1, wherein said queue object groups each includes data processor (112) and a storage unit (103);
said storage unit (103) including:
a group turn-waiting queue storage unit (113) for storing the group turn-waiting queue in which queue reservations from user terminals are registered;
an assignment/selection rule storage unit (114) for storing assignment/selection rules for giving priority to a queue registration request from a specific user by raising the ranking of user information of said specific user in the group turn-waiting queue
a queue object current state information storage unit (123) for storing queue object current state information that has been obtained that includes vacant seating information of queue objects within said queue object group; and
a queue object information summarization rule storage unit (133) for storing rules for producing summary information according to objectives from said queue object current state information that has been stored;
and said data processor (102) including:
a reservation request acceptance unit (111) for accepting queue registration requests that have been received as input from user terminals;
a reservation queue control unit (112) for analyzing the queue registration requests and registering to said group turn-waiting queues, determining the order for assigning vacant seating according to prescribed conditions, and deleting registrations to said group turn-waiting queues when vacant seating has been assigned;
a queue object current state information acceptance unit (121) for accepting queue object current state information from queue object terminals;
a queue object current state information control unit (122) for updating queue object current state information that is stored in said queue object current state information storage unit by means of queue object current state information that has been accepted, and for reading and transmitting queue object current state information according to necessity;
a summary information production unit (131) for producing summary information that includes vacant seating information according to objectives from said queue object current state information in accordance with rules for producing summary information that are stored in said queue object current state information summarization rule storage unit; and
a summary information dispatch unit (132) for transmitting said summary information that has been produced to said user terminals according to objectives and notifying said reservation queue controller.

3. A control server according to claim 1 or 2, wherein said queue manipulation unit (12), queue object control unit (13), and usability notification unit (14) are provided in each of said queue object groups.

4. A control server according to claim 1 or 2, wherein said queue object control unit (13) is provided common to a plurality of said queue object groups and independently of said queue object groups, and said queue manipulation unit (12) and usability notification unit (14) are provided in each of said queue object groups.

5. A control server according to claim 1 or 2, wherein said queue object control unit (13), queue manipulation unit (12), and usability notification unit (14) are provided common to a plurality of said queue object groups and provided independently of said queue object groups.

6. A control server according to any of claims 1 to 5, comprising a queue object group generation unit (51) for registering favorite groups whereby users can register in advance a plurality of queue objects as users' groups; wherein said queue object group generation unit comprises:
a desired condition storage unit (521) for accumulating and storing desired conditions for queue objects that are transmitted from user terminals;
a new queue object group composition storage unit (522) for storing the compositions of new queue object groups that have been produced;
a desired condition acceptance unit (511) for accepting desired conditions for said queue objects that are transmitted from said user terminals;
a current state information search unit (512) for searching, based on current state information of each of said queue objects, for said queue objects that correspond to desired conditions that have been accumulated;
a relevant queue object selection unit (513) for selecting relevant queue objects based on current state information that has been searched;
a new queue object group composition production unit (514) for producing the compositions of new queue object groups when grouping said relevant queue objects; and
a new queue object group composition output unit (515) for supplying as output the new queue object group compositions that have been produced and for newly constructing said queue object groups.

7. A queue object control system, comprising:
queue object terminals (41) that are established in queue objects (40);
user terminals (81) for queue registration for making reservations of said queue objects; and
a control serven (10) according to any one of claims 1 to 6 for both accepting queue registration from said user terminal and controlling turn-waiting queues at said queue objects based on queue registrations that have been accepted.

8. A queue object control system according to claim 7, wherein:
said user terminals each include a reception confirmation information dispatch unit (815) for, upon receiving vacant seating information of a queue object in which queue registration has been made as said usability notification from said control server, transmitting reception confirmation information of said vacant seating information to said control server; and
said control server includes a processor for: counting both the time elapsed from a transmission of said usability notification and the number of such transmissions; resending said usability notification to said user terminal upon passage of a prescribed time interval; and deleting the registration of the relevant user in the turn-waiting queue when the number of transmissions reaches a prescribed number or when said reception confirmation information has been received.

9. A queue object control system according to claims 7 or 8, wherein:
said user terminals are configured to perform queue registration directly to said queue object terminals for reserving the use of queue objects;
said queue manipulation unit, upon accepting use reservations for said queue object groups from said user terminals, both registers information of the users that have made the use reservations in the turn-waiting queues in said queue object groups, reports said use reservations that have been accepted to the queue object terminals of the queue objects that belong to said queue object groups and transfers the assignment of vacant seating; and
these queue object terminals include other queue manipulation units that register and control information of users in turn-waiting queues in their own queue objects based on use reservations that have been reported from said control server and direct use reservations from said user terminals.

10. A queue object control system according to claim 9, wherein notification of use reservations from said control server to said queue object terminals is performed by means of only identifiers of said queue object groups.

11. A queue object control system according to claim 10, wherein said queue manipulation units are configured to enable use reservations to said queue object terminals without regard to use requests from said user terminals.

12. A queue object control system according to claim 11, wherein said queue manipulation units include:
queue object queue addition rules for determining whether to assign, to any of said queue object terminals, use reservations that are performed only by means of identifiers of said queue object groups and regardless of use requests from said user terminals; and/or
queue object queue deletion rules for determining whether to delete said use reservations from any of said queue object terminals.

13. A queue object control system according to claim 12, wherein said queue object queue additions rules and said queue object queue deletion rules are rules for adding and deleting the identifiers of said queue object groups in accordance with the number of reservation registrations in the turn-waiting queues of said control server and/or the number of reservation registrations in the turn-waiting queues of said queue object terminals.

14. A queue object control system according to claim 9, wherein said queue object terminals each include a usability notification unit for, when a queue object in which a queue object terminal is established can be used, transmitting as a usability notification the ability to use the queue object to said user terminal that has been assigned based on the use assignment of said other queue manipulation unit of the queue object terminal.

15. A queue object control system according to claim 9, wherein said queue object terminals each include a current state information acceptance unit that can acquire current state information that includes vacant seating information of said queue object terminals within said queue object groups by way of said control server.

16. A queue object control system according to any of claims 7 to 15, wherein the assignment of use to said users that are registered in said turn-waiting queues of said queue manipulation units when said queue objects can be used is performed to users that are selected according to prescribed standards from among any of users that are at the head of said turn-waiting queues, users for which urgency has been registered in advance, and users that are registered in specific member lists.

17. A queue object control system according to any of claims 7 to 16, wherein said queue object groups are groups of queue objects that are selected by means of conditions indicated by prescribed service requesters from lists that have been registered in advance.

18. A queue object control system according to claim 17, wherein said queue object groups are groups of service provider businesses that include shops and restaurants.

19. A queue object control system according to claim 17, wherein said queue object groups that are controlled by said control server are any of: a group of queue objects that have the same business conditions; a group of queue objects that are in the same area; a group of queue objects that have a high level of popularity; a group of queue objects that have a high rate of user turnover; a group of queue objects that are rated as users' favorites; a group that contains queue objects in which users can obtain special benefits; or a combination of at least two of these groups.

20. A queue object control system according to any of claims 7 to 19, wherein said control server further includes a charge information control unit (61) for accumulating charge information for each of said queue objects; and charge information that corresponds to queue objects that become available for use is updated at said queue object control units (13).

21. A user terminal (81), said user terminal being the user terminal of a queue object control system in which queue object terminals (44) that are established at queue objects (40), user terminals for making queue registrations for making reservations of said queue objects, and a control server (10) according to claim 1 for controlling said turn-waiting queues are connected by way of a network so as to allow communication, wherein said queue objects have been sorted according to prescribed categories in group units in such a manner that a plurality of group turn-waiting queues is defined;
said the user terminal including:
an operator input unit (805) for entering information;
a queue reservation information production unit (811) for producing queue reservation information by means of information that has been applied as input by said operator input unit;
a queue reservation transmitter (812) for transmitting queue reservation information that has been produced to a prescribed output destination; and
a reservation information acceptance unit (813) for accepting summary information that has been received from said control server and that includes the occurrence of vacant seating relating to queue objects for which queue registration has been carried out,
wherein the user terminal (81) is adapted to transmit a queue registration request to a queue object group to the control server (10).

22. A user terminal according to claim 21, wherein said user terminal consists of a portable telephone.

23. A user terminal according to claim 21, wherein said user terminal consists of a portable information terminal.

24. A user terminal according to claim 21, wherein said user terminal consists of a private input/output device.

25. A queue object control method, said queue object control method being the queue object control method of a queue object control system in which queue object terminals (41) that are established at queue objects (40), user terminals (81) for making queue registrations for making reservations of said queue objects, and a control server (10) for controlling turn-waiting queues are connected by way of a network so as to allow communication, wherein said queue objects have been sorted according to prescribed categories in group units in such a manner that a plurality of group turn-waiting queues is defined; said queue object control method including the steps wherein:
said queue object terminals (41) transmit current state information that includes the state of usability of said respective queue objects to said control server,
said control server (40) collectively stores and controls current state information that has been received from said queue object terminals;
said user terminals (81) transmits a prescribed queue reservation request to a queue object group based on the content that has been applied as input by a user by way of an operation unit;
said control server accepts the queue reservation request from said user terminal and registers the request in a group turn-waiting queues of the queue object group;
said control server recognizes that a queue object that belongs to a queue object group has become available for use based on current state information of queue objects that has been stored,
selects a user terminal that is registered in a group turn-waiting queues of the queue object, generates, as summary information, vacant seating information relating to the queue object based on queue object information summarization rules, and transmits the vacant seating information to said user terminal that has been selected; and
said user terminal accepts the vacant seating information for said queue object that has become avaible for use.

26. A queue object control method according to claim 25, further comprising the steps wherein:
said queue object terminals (41) directly accept queue reservation requests from said user terminals (81);
said control servel (10) reports queue reservation requests that have been accepted from said user terminals (81) and registered in group turn-waiting queues to said queue object terminals (41) that are affiliated with the group turn-waiting queues; and
said queue object terminals (41) register queue reservation requests from said user terminals (81) and queue reservation requests from user terminals (81) that have been reported from said control server (10) in the group turn-waiting queues of the queue object terminals (41), and select said user terminals (81) that are registered in said group turn-waiting queues when the queue objects become available for use.

27. A recording medium in which a control program is recorded for controlling a control server (10) of a queue object control system in which queue object terminals (44) that are established at queue object (40), user terminals (81) for making queue registrations for making reservations of said queue objects, and said control server for controlling said turn-waiting queues are connected by way of a network so as to allow communication, wherein said queue objects have been sorted according to prescribed categories in group units in such a manner that a plurality of group turn-waiting queues is defined; a program being recorded in said recording medium for causing a computer of said control server to execute procedures for:
receiving states of usability of queue objects from said queue object terminals and controlling whether any of said queue objects of said queue object groups becomes available for use;
receiving a queue registration request that has been transmitted from a user terminal for a queue object group and registering in a group turn-waiting queue, and when a queue object that belongs to a queue object group becomes available for use, selecting a user terminal that is registered in the group turn-waiting queue of said queue object group; and
transmitting notification indicating the ability to use said queue object that has become available for use to said user terminal that has been selected.

## Patentansprüche

1. Steuerserver (10), wobei der Steuerserver mittels eines Netzwerks mit Warteschlangenobjektendgeräten (41), die an Warteschlangenobjekten (40) eingerichtet sind, und mit Teilnehmerendgeräten (81) zum Vornehmen von Warteschlangenregistrierungen, um Reservierungen der Warteschlangenobjekte vorzunehmen, verbunden sind; wobei der Steuerserver sowohl Warteschlangenregistrierungen von den Teilnehmerendgeräten annimmt als auch Warteschlangen an den Warteschlangenobjekten basierend auf den Warteschlangeregistrierungen, die angenommen wurden, steuert, wobei die Warteschlangenobjekte gemäß vorgeschriebenen Kategorien in Gruppeneinheiten in einer derartigen Weise sortiert wurden, dass mehrere Gruppen-Warteschlangen definiert werden, wobei der Steuerserver aufweist:
- eine Warteschlangenobjekt-Steuereinheit (13) zum Steuern der Nutzbarkeit von Warteschlangenobjekten, die zu einer Warteschlangen-Objektgruppe gehören, basierend auf Nutzbarkeitszuständen der Warteschlangenobjekte (40), die von den Warteschlangenobjektendgeräten (41) geliefert werden;
- eine Warteschlangen-Handhabungseinheit (12), um sowohl nach dem Empfangen einer Warteschlangen-Registrierungsanforderung von einem Teilnehmerendgerät an einer Warteschlangenobjektgruppe Teilnehmerinformationen basierend auf den Warteschlangen-Registrierungsanforderungen an eine Gruppenwarteschlange der Warteschlangenobjektgruppe zu registrieren, als auch nach dem Empfangen der Benachrichtigung von der Wartschlangenobjekt-Steuereinheit, die anzeigt, dass ein Warteschlangenobjekt, das zu einer Warteschlangeobjektgruppe gehört, nutzbar wurde, basierend auf Teilnehmerinformationen, die in der Gruppenwarteschlange der Warteschlangenobjektgruppe registriert wurden, ein Teilnehmerendgerät auszuwählen, das ein Übertragungsziel sein soll; und
- eine Nutzbarkeitsbenachrichtigungseinheit (14) zum Übertragen einer Benachrichtigung der Nutzbarkeit in Bezug auf das Warteschlangenobjekt, das für das Teilnehmerendgerät nutzbar wurde, welches durch die Warteschlangen-Handhabungseinheit ausgewählt wurde.

2. Steuerserver nach Anspruch 1, wobei die Warteschlangenobjektgruppe jeweils eine Datenverarbeitungseinrichtung (102) und eine Speichereinheit (103) aufweisen;
wobei die Speichereinheit (103) aufweist:
eine Gruppenwarteschlangen-Speichereinheit (113) zum Speichern der Gruppenwarteschlange, in der Warteschlangenreservierungen von den Teilnehmerendgeräten registriert werden;
eine Zuweisungs-/Auswahlregel-Speichereinheit (114) zum Speichern von Zuweisungs-/Auswahlregeln, um einer Warteschlangenregistrierung von einem spezifischen Teilnehmer Priorität zu geben, indem der Rang von Teilnehmerinformationen des spezifischen Teilnehmers in der Gruppenwarteschlange erhöht wird;
eine Informationsspeichereinheit (123) für den aktuellen Warteschlangenobjektzustand zum Speichern von aktuellen Warteschlangenobjekt-Zustandsinformationen, die erhalten wurden, welche Informationen über freie Aufnahmen von Warteschlangenobjekten innerhalb der Warteschlangenobjektgruppen umfassen; und
eine Regelspeichereinheit (133) für Warteschlangenobjekt-Zusammenfassungsinformationen, um Zusammenfassungsinformationen gemäß Zielen aus den aktuellen Warteschlangenobjekt-Zustandsinformationen, die gespeichert wurden, zu erzeugen;
und wobei die Datenverarbeitungseinrichtung (102) umfasst:
eine Reservierungsanforderungs-Annahmeeinheit (111) zum Annehmen von Warteschlangen-Registrierungsanforderungen, die als Eingabe von Teilnehmerendgeräten empfangen wurden;
eine Reservierungswarteschlangen-Steuereinheit (112) zum Analysieren der Warteschlangen-Registrierungsanforderungen und Registrieren bei den Gruppenwarteschlangen, Bestimmen der Reihenfolge für die Zuweisung einer freien Aufnahme gemäß vorgeschriebenen Bedingungen und Löschen von Registrierungen bei den Warteschlangen, wenn eine freie Aufnahme zugewiesen wurde;
eine Annahmeeinheit (121) für aktuelle Warteschlangenobjekt-Zustandsinformationen zum Annehmen von aktuellen Warteschlangenobjekt-Zustandsinformationen von Warteschlangenobjektendgeräten;
eine Steuereinheit (122) für aktuelle Warteschlangenobjekt-Zustandsinformationen zum Aktualisieren von aktuellen Warteschlangenobjekt-Zustandsinformationen, die in der Informationsspeichereinheit für den aktuellen Warteschlangenobjektzustand gespeichert sind, mit Hilfe von aktuellen Warteschlangenobjekt-Zustandsinformationen, die angenommen wurden, und zum Lesen und Übertragen von aktuellen Warteschlangenobjekt-Zustandsinformationen nach Bedarf;
eine Zusammenfassungsinformations-Erzeugungseinheit (131) zum Erzeugen von Zusammenfassungsinformationen, die Informationen über freie Aufnahmen umfassen, gemäß Zielen von den aktuellen Warteschlangenobjekt-Zustandsinformationen gemäß Regeln zur Erzeugung von Zusammenfassungsinformationen, die in der Speichereinheit für aktuelle Warteschlangenobjekt-Zustandszusammenfassungsinformationsregeln gespeichert sind; und
eine Zusammenfassungsinformations-Absendeeinheit (132) zum Übertragen der Zusammenfassungsinformationen, die erzeugt wurden, gemäß Zielen an die Teilnehmerendgeräte und Benachrichtigen der Reservierungswarteschlangensteuerung.

3. Steuerserver gemäß Anspruch 1 oder 2, wobei die Warteschlangen-Handhabungseinheit (12), Warteschlangenobjekt-Steuereinheit (13) und Nutzbarkeitsbenachrichtigungseinheit (14) in jeder der Warteschlangenobjektgruppen bereitgestellt sind.

4. Steuerserver nach Anspruch 1 oder 2, wobei die Warteschlangenobjekt-Steuereinheit (13) für mehrere der Warteschlangenobjektgruppen gemeinsam und unabhängig von den Warteschlangenobjektgruppen bereitgestellt ist, und die Warteschlangen-Handhabungseinheit (12) und Nutzbarkeitsbenachrichtigungseinheit (14) in jeder der Warteschlangenobjektgruppen bereitgestellt sind.

5. Steuerserver nach Anspruch 1 oder 2, wobei die Warteschlangenobjekt-Steuereinheit (13), die Warteschlangen-Handhabungseinheit (12) und die Nutzbarkeitsbenachrichtigungseinheit (14) für mehrere der Warteschlangenobjektgruppen gemeinsam bereitgestellt sind und unabhängig von den Warteschlangenobjektgruppen bereitgestellt sind.

6. Steuerserver gemäß einem der Ansprüche 1 bis 5, der eine Warteschlangenobjektgruppen-Erzeugungseinheit (51) zum Registrieren bevorzugter Gruppen aufweist, wobei Teilnehmer im Voraus mehrere Warteschlangenobjekte als Teilnehmergruppen registrieren können; wobei die Warteschlangenobjektgruppen-Erzeugungseinheit aufweist:
eine Gewünschte-Zustand-Speichereinheit (521) zum Sammeln und Speichern gewünschter Bedingungen für Warteschlangenobjekte, die von Teilnehmerendgeräten übertragen werden;
eine Speichereinheit (522) für die Zusammensetzung neuer Warteschlangenobjektgruppen, um die Zusammensetzung neuer Warteschlangenobjektgruppen, die erzeugt wurden, zu speichern;
eine Gewünschter-Zustand-Annahmeeinheit (511) zum Annehmen gewünschter Bedingungen für die Warteschlangenobjekte, die von den Teilnehmerendgeräten übertragen werden;
eine Aktueller-Zustandsinformations-Sucheinheit (512), um basierend auf aktuellen Zustandsinformationen jedes Warteschlangenobjekts nach Warteschlangenobjekten zu suchen, die gewünschten Bedingungen entsprechen und gesammelt wurden;
eine Relevantes-Warteschlangenobjekt-Auswahleinheit (513) zum Auswählen relevanter Warteschlangenobjekte basierend auf aktuellen Zustandsinformationen, die gesucht wurden;
eine Erzeugungseinheit (514) für neue Warteschlangenobjektgruppenzusammensetzungen zum Erzeugen der Zusammensetzungen von neuen Warteschlangenobjektgruppen, wenn die relevanten Warteschlangenobjekte gruppiert werden; und
eine Ausgabeeinheit (515) für neue Warteschlangenobjektgruppenzusammensetzungen, um als Ausgabe die neuen Warteschlangenobjektgruppenzusammensetzungen zu liefern, die erzeugt wurden, und um die Warteschlangenobjektgruppen neu aufzubauen.

7. Warteschlangenobjekt-Steuersystems, das aufweist:
Warteschlangenobjektendgeräte (41), die in Warteschlangenobjekten (40) eingerichtet werden;
Teilnehmerendgeräte (81) für die Warteschlangenregistrierung, um Reservierungen der Warteschlangenobjekte vorzunehmen; und
einen Steuerserver (10) nach einem der Ansprüche 1 bis 6, um sowohl Warteschlangenregistrierungen von den Teilnehmerendgeräten anzunehmen als auch basierend auf Warteschlangenregistrierungen, die angenommen wurden, Warteschlangen an den Warteschlangenobjekten zu steuern.

8. Warteschlangenobjekt-Steuersystems nach Anspruch 7, wobei:
die Teilnehmerendgeräte jeweils eine Empfangsbestätigungsinformations-Absendeeinheit (815) umfassen, um nach dem Empfangen von Informationen über freie Aufnahmen eines Warteschlangenobjekts, in dem eine Warteschlangenregistrierung vorgenommen wurde, von dem Steuerserver als die Nutzbarkeitsbenachrichtigung Empfangsbestätigungsinformationen der Informationen über freie Aufnahmen an den Steuerserver zu übertragen; und
der Steuerserver eine Verarbeitungseinrichtung umfasst, um: sowohl die Zeit, die ab einer Übertragung der Nutzbarkeitsbenachrichtigung vergangen ist, als auch die Anzahl derartiger Übertragungen zu zählen; die Nutzbarkeitsbenachrichtigung nach dem Verlauf eines vorgeschriebenen Zeitintervalls erneut an das Teilnehmerendgerät zu senden; und die Registrierung des relevanten Teilnehmers in der Warteschlange zu löschen, wenn die Anzahl von Übertragungen eine vorgegebene Anzahl erreicht oder wenn die Empfangsbestätigungsinformationen empfangen wurden.

9. Warteschlangenobjekt-Steuersystems nach Anspruch 7 oder 8, wobei:
die Teilnehmerendgeräte aufgebaut sind, um die Warteschlangenregistrierung direkt bei den Warteschlangenobjektendgeräten durchzuführen, um die Verwendung der Warteschlangenobjekte zu reservieren;
die Warteschlangen-Handhabungseinheit nach dem Annehmen von Nutzungsreservierungen für die Warteschlangenobjektgruppen von den Teilnehmerendgeräten sowohl Informationen der Teilnehmer, die die Nutzungsreservierungen bei den Warteschlangen in den Warteschlangenobjektgruppen vorgenommen haben, registriert als auch die Nutzungsreservierungen, die angenommen wurden, bei den Warteschlangenobjektendgeräten der Warteschlangenobjekte meldet, die zu den Warteschlangenobjektgruppen gehören, und die Zuweisung einer freien Aufnahme überträgt; und
diese Warteschlangenobjektendgeräte andere Warteschlangen-Handhabungseinheiten umfassen, die Informationen von Teilnehmern in Warteschlangen in ihren eigenen Warteschlangenobjekten basierend auf Nutzungsreservierungen, die von dem Steuerserver gemeldet wurden und die Reservierungen von den Teilnehmerendgeräten lenken, registrieren und steuern.

10. Warteschlangenobjekt-Steuersystems nach Anspruch 9, wobei die Benachrichtigung von Nutzungsreservierungen von dem Steuerserver an die Warteschlangenobjektendgeräte nur mit Hilfe von Kennungen der Warteschlangenobjektgruppen durchgeführt wird.

11. Warteschlangenobjekt-Steuersystems nach Anspruch 10, wobei die Warteschlangen-Handhabungseinheiten aufgebaut sind, um Nutzungsreservierungen an die Warteschlangenobjektendgeräte ohne Rücksicht auf Nutzungsanforderungen von den Teilnehmerendgeräten zu ermöglichen.

12. Warteschlangenobjekt-Steuersystems nach Anspruch 11, wobei die Warteschlangen-Handhabungseinheiten umfassen:
Warteschlangenobjekt-Hinzufügeregeln zur Bestimmung, ob an eines der Warteschlangenobjektendgeräte Nutzungsreservierungen zugewiesen werden sollen, die nur mit Hilfe von Kennungen der Warteschlangenobjektgruppen und ungeachtet von Nutzungsanforderungen von den Teilnehmerendgeräten durchgeführt werden; und/oder
Warteschlangenobjekt-Warteschlangenlöschregeln zur Bestimmung, ob die Nutzungsreservierungen von einem der Warteschlangenobjektendgeräte gelöscht werden sollen.

13. Warteschlangenobjekt-Steuersystems nach Anspruch 12, wobei die Warteschlangenobjekt-Hinzufügeregeln und die Warteschlangenobjekt-Warteschlangenlöschregeln Regeln zum Hinzufügen und Löschen der Kennungen der Warteschlangenobjektgruppen gemäß der Anzahl von Reservierungsregistrierungen in den Warteschlangen des Steuerservers und/oder der Anzahl von Reservierungsregistrierungen in den Warteschlangen der Warteschlangenobjektendgeräte sind.

14. Warteschlangenobjekt-Steuersystems nach Anspruch 9, wobei die Warteschlangenobjektendgeräte jeweils eine Nutzbarkeitsbenachrichtigungseinheit umfassen, um, wenn ein Warteschlangenobjekt, in dem ein Warteschlangenobjektendgerät eingerichtet ist, benutzt werden kann, als eine Nutzbarkeitsbenachrichtigung die Fähigkeit, das Warteschlangenobjekt zu verwenden, an das Teilnehmerendgerät zu übertragen, das basierend auf der Nutzungszuweisung der Warteschlangen-Handhabungseinheit des Warteschlangenobjektendgeräts zugewiesen wurde.

15. Warteschlangenobjekt-Steuersystems nach Anspruch 9, wobei die Warteschlangenobjektendgeräte jeweils eine Annahmeeinheit für aktuelle Zustandsinformationen umfassen, die aktuelle Zustandsinformationen gewinnen können, die Informationen über freie Aufnahmen der Warteschlangenobjektendgeräte innerhalb der Warteschlangenobjektgruppen mit Hilfe des Steuerservers gewinnen kann.

16. Warteschlangenobjekt-Steuersystems nach einem der Ansprüche 7 bis 15, wobei die Nutzungszuweisung an die Teilnehmer, die in den Warteschlangen der Warteschlangen-Handhabungseinheiten registriert sind, wenn die Warteschlangenobjekte verwendet werden können, für Teilnehmer durchgeführt wird, die gemäß vorgeschriebenen Standards aus beliebigen Teilnehmern ausgewählt werden, die am Anfang der Warteschlangen sind, Teilnehmern, deren Dringlichkeit im Voraus registriert wurde, und Teilnehmern, die in speziellen Mitgliedslisten registriert sind.

17. Warteschlangenobjekt-Steuersystems nach einem der Ansprüche 7 bis 16, wobei die Warteschlangenobjektgruppen Gruppen von Warteschlangenobjekten sind, die mit Hilfe von Bedingungen ausgewählt werden, die von vorgeschriebenen Dienstanforderern durch Listen angezeigt werden, die im Voraus registriert wurden.

18. Warteschlangenobjekt-Steuersystems nach Anspruch 17, wobei die Warteschlangenobjektgruppen Gruppen von Dienstanbietergeschäften sind, die Läden und Restaurants umfassen.

19. Warteschlangenobjekt-Steuersystems nach Anspruch 17, wobei die Warteschlangenobjektgruppen, die von dem Steuerserver gesteuert werden, beliebige der folgenden sind: eine Gruppe von Warteschlangenobjekten, die die gleichen Geschäftsbedingungen haben; eine Gruppe von Warteschlangenobjekten, die in dem gleichen Bereich sind; eine Gruppe von Warteschlangenobjekten, die ein hohes Beliebtheitsniveau haben; eine Gruppe von Warteschlangenobjekten, die eine hohe Teilnehmerumsatzrate haben; eine Gruppe von Warteschlangenobjekten, die als Teilnehmerfavoriten bewertet werden; eine Gruppe, die Warteschlangenobjekte enthält, in denen Teilnehmer besondere Vorteile erhalten können; oder eine Kombination aus wenigstens zwei dieser Gruppen.

20. Warteschlangenobjekt-Steuersystems nach einem der Ansprüche 7 bis 19, wobei der Steuerserver ferner eine Gebühreninformationssteuereinheit (61) zum Sammeln von Gebühreninformationen für jedes der Warteschlangenobjekte aufweist; und
wobei Gebühreninformationen, die Warteschlangenobjekten entsprechen, die für die Verwendung verfügbar werden, an der Warteschlangenobjekt-Steuereinheit (13) aktualisiert werden.

21. Teilnehmerendgerät (81), wobei das Teilnehmerendgerät das Teilnehmerendgerät eines Warteschlangenobjekt-Steuersystems ist, in dem Warteschlangenobjektendgeräte (41), die an Warteschlangenobjekten (40) eingerichtet werden, Teilnehmerendgeräte zum Vornehmen von Warteschlangenregistrierungen, um Registrierungen der Warteschlangenobjekte vorzunehmen, und ein Steuerserver (10) nach Anspruch 1 zum Steuern der Warteschlangen mit Hilfe eines Netzwerks verbunden sind, um die Kommunikation zu ermöglichen, wobei die Warteschlangenobjekte gemäß vorgeschriebenen Kategorien in Gruppeneinheiten in einer derartigen Weise sortiert wurden, dass mehrere Gruppen-Warteschlangen definiert werden;
wobei das Teilnehmerendgerät aufweist:
eine Betreibereingabeeinheit (805) zum Eingeben von Informationen;
eine Warteschlangenreservierungsinformations-Erzeugungseinheit (811) zum Erzeugen von Warteschlangenreservierungsinformationen mit Hilfe von Informationen, die als Eingabe von der Betreibereingabeeinheit eingespeist wurden;
einen Warteschlangenreservierungssender (812) zum Übertragen von Warteschlangenreservierungsinformationen, die erzeugt wurden, an ein vorgeschriebenes Ausgabeziel; und
eine Reservierungsinformationen-Annahmeeinheit (813) zum Annehmen von Zusammenfassungsinformationen, die von dem Steuerserver empfangen wurden und die das Auftreten einer freien Aufnahme in Bezug auf Warteschlangenobjekte, für welche die Warteschlangenregistrierung ausgeführt wurde, umfassen,
wobei das Teilnehmerendgerät (81) geeignet ist, um eine Warteschlangen-Registrierungsanforderung für eine Warteschlangenobjektgruppe an den Steuerserver (10) zu übertragen.

22. Teilnehmerendgerät nach Anspruch 21, wobei das Teilnehmerendgerät aus einem tragbaren Telefon besteht.

23. Teilnehmerendgerät nach Anspruch 21, wobei das Teilnehmerendgerät aus einem tragbaren Informationsendgerät besteht.

24. Teilnehmerendgerät nach Anspruch 21, wobei das Teilnehmerendgerät aus einer privaten Eingabe-/Ausgabevorrichtung besteht.

25. Warteschlangenobjektsteuerverfahren, wobei das Warteschlangenobjektsteuerverfahren das Warteschlangenobjektsteuerverfahren eines Warteschlangenobjekt-Steuersystems ist, in dem Warteschlangenobjektendgeräte (41), die an Warteschlangenobjekten (40) eingerichtet sind, Teilnehmerendgeräte (81) zum Vornehmen von Warteschlangenregistrierungen, um Reservierungen für die Warteschlangenobjekte vorzunehmen, und ein Steuerserver (10) zum Steuern von Warteschlangen mit Hilfe eines Netzwerks verbunden sind, um die Kommunikation zu ermöglichen, wobei die Warteschlangenobjekte gemäß vorgeschriebenen Kategorien in Gruppeneinheiten in einer derartigen Weise sortiert wurden, dass mehrere Gruppen-Warteschlangen definiert werden; wobei das Warteschlangenobjektsteuerverfahren die Schritte aufweist, wobei:
die Warteschlangenobjektendgeräte (41) aktuelle Zustandsinformationen, die den Nutzbarkeitszustand der jeweiligen Warteschlangenobjekte umfassen, an den Steuerserver übertragen,
der Steuerserver (40) aktuelle Zustandsinformationen, die von den Warteschlangenobjektendgeräten empfangen wurden, zusammen speichert und steuert;
das Teilnehmerendgerät (81) eine vorgeschriebene Warteschlangen-Reservierungsanforderung basierend auf dem Inhalt, der mittels einer Bedieneinheit als Eingabe durch einen Teilnehmer eingespeist wurde, an eine Warteschlangen-objektgruppe überträgt;
der Steuerserver die Warteschlangen-Reservierungsanforderung von dem Teilnehmerendgerät annimmt und die Anforderung in einer Gruppe von Warteschlangen der Warteschlangenobjektgruppe registriert;
wobei der Steuerserver basierend auf aktuellen Zustandsinformationen von Warteschlangenobjekten, die gespeichert wurden, erkennt, dass ein Warteschlangenobjekt, das zu einer Warteschlangenobjektgruppe gehört, für die Nutzung verfügbar wurde, ein Teilnehmerendgerät auswählt, das in einer Gruppenwarteschlange des Warteschlangenobjekts registriert ist, als Zusammenfassungsinformationen basierend auf Warteschlangenobjekt-Zusammenfassungsinformationsregeln Informationen über freie Aufnahmen in Bezug auf die Warteschlangenobjekte erzeugt und die Informationen über freie Aufnahmen an das Teilnehmerendgerät, das ausgewählt wurde, überträgt; und
das Teilnehmerendgerät die Informationen über freie Aufnahmen für das Warteschlangenobjekt, das für die Nutzung verfügbar wurde, annimmt.

26. Warteschlangenobjektsteuerverfahren nach Anspruch 25, das ferner die folgenden Schritte aufweist, wobei:
die Warteschlangenobjektendgeräte (41) Warteschlangen-Reservierungsanforderungen direkt von den Teilnehmerendgeräten (81) annehmen;
der Steuerserver (10) Warteschlangen-Reservierungsanforderungen, die von den Teilnehmerendgeräten (81) angenommen wurden und in Gruppenwarteschlangen registriert wurden, an die Warteschlangenobjektendgeräte (41), die zu den Gruppenwarteschlangen gehören, meldet; und
die Warteschlangenobjektendgeräte (41) Warteschlangen-Reservierungsanforderungen von den Teilnehmerendgeräten (81) registrieren und Warteschlangen-Reservierungsanforderungen von Teilnehmerendgeräten (81), die von dem Steuerserver (10) gemeldet wurden, in Warteschlangen in den Gruppenwarteschlangen der Warteschlangenobjektendgeräte (41) einreihen und Teilnehmerendgeräte (81) auswählen, die in den Warteschlangen registriert werden, wenn die Warteschlangenobjekte für die Nutzung verfügbar werden.

27. Aufzeichnungsmedium, in dem ein Steuerprogramm zur Steuerung eines Steuerservers (10) eines Warteschlangenobjekt-Steuersystems aufgezeichnet ist, in dem Warteschlangenobjektendgeräte (41), die an Warteschlangenobjekten (40) eingerichtet sind, Teilnehmerendgeräte (81) zum Vornehmen von Warteschlangenregistrierungen, um Reservierungen für die Warteschlangenobjekte vorzunehmen, und der Steuerserver zum Steuern der Warteschlangen mit Hilfe eines Netzwerks verbunden sind, um die Kommunikation zu ermöglichen, wobei die Warteschlangenobjekte gemäß vorgeschriebenen Kategorien in Gruppeneinheiten in einer derartigen Weise sortiert wurden, dass mehrere Gruppen-Warteschlangen definiert werden; wobei ein Programm auf dem Aufzeichnungsmedium aufgezeichnet ist, um zu bewirken, dass ein Computer des Steuerservers Verfahren ausführt zum:
Empfangen von Nutzbarkeitszuständen für Warteschlangenobjekte von den Warteschlangenobjektendgeräten und Steuern, ob eines der Warteschlangenobjekte der Warteschlangenobjektgruppen für die Nutzung verfügbar wird;
Empfangen einer Warteschlangen-Registrierungsanforderung für eine Warteschlangenobjektgruppe, die von einem Teilnehmerendgerät übertragen wurde, und Registrieren in einer Gruppenwarteschlange, und wenn ein Warteschlangenobjekt, das zu einer Warteschlangenobjektgruppe gehört, für die Nutzung verfügbar wird, Auswählen eines Teilnehmerendgeräts, das in den Gruppenwarteschlangen der Warteschlangenobjektgruppe registriert ist; und
Übertragen einer Benachrichtigung, welche die Fähigkeit, das Warteschlangenobjekt, das für die Nutzung verfügbar wurde, zu nutzen, anzeigt, an das Teilnehmerendgerät, das ausgewählt wurde.

## Revendications

1. Serveur de commande (10), ledit serveur de commande étant connecté au moyen d'un réseau à des terminaux d'objet de file d'attente (41) qui sont établis au niveau d'objets de file d'attente (40) et à des terminaux utilisateur (81) pour réaliser des enregistrements de file d'attente pour faire des réservations desdits objets de file d'attente ; ledit serveur de commande acceptant à la fois des enregistrements de file d'attente depuis lesdits terminaux utilisateur et la commande des files d'attente à attente de tour au niveau desdits objets de file d'attente d'après les enregistrements de file d'attente qui ont été acceptés, dans lequel lesdits objets de file d'attente ont été triés selon des catégories prescrites dans des unités de groupe de telle sorte qu'une pluralité de files d'attente à attente de tour de groupe est définie, ledit serveur de commande comprenant :
- une unité de commande d'objet de file d'attente (13) permettant de commander l'état de facilité d'utilisation des objets de file d'attente qui appartiennent à un groupe d'objets de file d'attente d'après des états de facilité d'utilisation desdits objets de file d'attente (40) qui sont fournis par lesdits terminaux d'objet de file d'attente (41) ;
- une unité de manipulation de file d'attente (12) pour à la fois, lors de la réception d'une demande d'enregistrement de file d'attente d'un terminal utilisateur audit groupe d'objets de file d'attente, enregistrer les informations d'utilisateur d'après la demande d'enregistrement de file d'attente dans une file d'attente à attente de tour de groupe du groupe d'objets de file d'attente et, lors de la réception d'une notification depuis ladite unité de commande d'objet de file d'attente indiquant qu'un objet de file d'attente qui appartient à un groupe d'objets de file d'attente est devenu utilisable, sélectionner un terminal utilisateur qui doit être une destination de transmission basée sur les informations d'utilisateur qui ont été enregistrées dans la file d'attente à attente de tour de groupe dudit groupe d'objets de file d'attente ; et
- une unité de notification de facilité d'utilisation (14) permettant de transmettre une notification de facilité d'utilisation concernant ledit objet de file d'attente, qui est devenu utilisable par le terminal utilisateur qui a été sélectionné par ladite unité de manipulation de file d'attente.

2. Serveur de commande selon la revendication 1, dans lequel lesdits groupes d'objets de file d'attente comportent chacun un processeur de données (102) et une unité de stockage (103) ;
ladite unité de stockage (103) comprenant :
une unité de stockage de file d'attente à attente de tour de groupe (113) permettant de stocker la file d'attente à attente de tour de groupe dans laquelle les réservations de file d'attente en provenance des terminaux utilisateur sont enregistrées ;
une unité de stockage de règle d'attribution/sélection (114) permettant de stocker des règles d'attribution/sélection pour donner la priorité à une demande d'enregistrement de file d'attente en provenance d'un utilisateur spécifique en relevant le classement des informations d'utilisateur dudit utilisateur spécifique dans la file d'attente à attente de tour de groupe ;
une unité de stockage d'informations d'état actuel d'objet de file d'attente (123) permettant de stocker des informations d'état actuel d'objet de file d'attente qui ont été obtenues et qui comprennent des informations de siège vacant d'objets de file d'attente dans ledit groupe d'objets de file d'attente ; et
une unité de stockage de règle de récapitulation d'informations d'objet de file d'attente (133) permettant de stocker des règles pour produire des informations récapitulatives selon les objectifs desdites informations d'état actuel d'objets de file d'attente qui ont été stockées ;
et ledit processeur de données (102) comprenant :
une unité d'acceptation de demande de réservation (111) permettant d'accepter les demandes d'enregistrement de file d'attente qui ont été reçues en tant qu'entrée en provenance des terminaux utilisateur ;
une unité de commande de file d'attente de réservation (112) permettant d'analyser les demandes d'enregistrement de file d'attente et d'enregistrer dans lesdites files d'attente à attente de tour de groupe, de déterminer l'ordre d'attribution de siège vacant selon des conditions prescrites, et de supprimer les enregistrements dans lesdites files d'attente à attente de tour de groupe lorsqu'un siège vacant a été attribué ;
une unité d'acceptation d'informations d'état actuel d'objet de file d'attente (121) permettant d'accepter des informations d'état actuel d'objet de file d'attente en provenance desdits terminaux de file d'attente ;
une unité de commande d'informations d'état actuel d'objet de file d'attente (122) permettant de mettre à jour des informations d'état actuel d'objet de file d'attente qui sont stockées dans ladite unité de stockage d'informations d'état actuel d'objet de file d'attente au moyen d'informations d'état actuel d'objet de file d'attente qui ont été acceptées, et permettant de lire et de transmettre des informations d'état actuel d'objet de file d'attente selon le besoin ;
une unité de production d'informations récapitulatives (131) permettant de produire des informations récapitulatives qui comprennent les informations de siège vacant selon les objectifs en provenance desdites informations d'état actuel d'objet de file d'attente en conformité avec des règles de production d'informations récapitulatives qui sont stockées dans ladite unité de stockage de règle de récapitulation d'information d'état actuel d'objet de file d'attente ; et
une unité de répartition d'informations récapitulatives (132) permettant de transmettre lesdites informations récapitulatives qui ont été produites dans lesdits terminaux utilisateur selon les objectifs et de notifier ladite unité de commande de file d'attente de réservation.

3. Serveur de commande selon la revendication 1 ou 2, dans lequel lesdites unités de manipulation de file d'attente (12), unité de commande d'objet de file d'attente (13), et unité de notification de facilité d'utilisation (14) sont agencées dans chacun desdits groupes d'objets de file d'attente.

4. Serveur de commande selon la revendication 1 ou 2, dans lequel ladite unité de commande d'objet de file d'attente (13) est agencée de façon commune à une pluralité desdits groupes d'objets de file d'attente et indépendamment desdits groupes d'objets de file d'attente, et lesdites unités de manipulation de file d'attente (12) et unité de notification de facilité d'utilisation (14) sont agencées dans chacun desdits groupes d'objets de file d'attente.

5. Serveur de commande selon la revendication 1 ou 2, dans lequel lesdites unités de commande d'objet de file d'attente (13), unité de manipulation de file d'attente (12), et unité de notification de facilité d'utilisation (14) sont agencées communément à une pluralité desdits groupes d'objets de file d'attente et agencées indépendamment desdits groupes d'objets de file d'attente.

6. Serveur de commande selon l'une quelconque des revendications 1 à 5, comprenant une unité de génération de groupes d'objets de file d'attente (51) permettant d'enregistrer des groupes préférés moyennant quoi les utilisateurs peuvent enregistrer à l'avance une pluralité d'objets de file d'attente en tant que groupes d'utilisateur ; dans lequel ladite unité de génération de groupes d'objets de file d'attente comprend :
une unité de stockage de condition souhaitée (521) permettant d'accumuler et de stocker les conditions souhaitées pour des objets de file d'attente qui sont transmis par les terminaux utilisateur ;
une unité de stockage de nouvelle composition de groupe d'objet de file d'attente (522) permettant de stocker les compositions de nouveaux groupes d'objets de file d'attente qui ont été produites ;
une unité d'acceptation de condition souhaitée (511) permettant d'accepter les conditions souhaitées pour lesdits objets de file d'attente qui sont transmis par lesdits terminaux utilisateur ;
une unité de recherche d'informations d'état actuel (512) permettant de rechercher, en se basant sur des informations d'état courant de chacun desdits objets de file d'attente, lesdits objets de file d'attente qui correspondent à des conditions souhaitées qui ont été accumulées ;
une unité de sélection d'objet de file d'attente pertinent (513) permettant de sélectionner des objets de file d'attente pertinents en se basant sur les informations d'état actuel qui ont fait l'objet d'une recherche ;
une unité de production de nouvelle composition de groupe d'objets de file d'attente (514) permettant de produire les compositions de nouveaux groupes d'objets de file d'attente lors du groupement desdits objets de file d'attente pertinents ; et
une unité de sortie de nouvelle composition de groupe d'objets de file d'attente (515) permettant de fournir comme sortie les nouvelles compositions de groupe d'objets de file d'attente qui ont été produites et pour construire à nouveau lesdits groupes d'objets de file d'attente.

7. Système de commande d'objets de file d'attente, comprenant :
des terminaux d'objet de file d'attente (41) qui sont établis dans des objets de file d'attente (40) ;
des terminaux utilisateur (81) permettant l'enregistrement de file d'attente pour effectuer des réservations desdits objets de file d'attente ; et
un serveur de commande (10) selon l'une quelconque des revendications 1 à 6 à la fois pour accepter les enregistrements de file d'attente en provenance desdits terminaux utilisateur et commander des files d'attente à attente de tour au niveau desdits objets de file d'attente d'après les enregistrements de file d'attente qui ont été acceptés.

8. Système de commande d'objet de file d'attente selon la revendication 7, dans lequel :
lesdits terminaux utilisateur comprennent chacun une unité de répartition d'informations de confirmation de réception (815) pour, lors de la réception d'informations de siège vacant d'un objet de file d'attente dans lequel l'enregistrement de file d'attente a été réalisé comme ladite notification de facilité d'utilisation en provenance dudit serveur de commande, transmettre des informations de confirmation de réception desdites informations de siège vacant audit serveur de commande ; et
ledit serveur de commande comprend un processeur pour : compter à la fois le temps écoulé à partir de la transmission de ladite notification de facilité d'utilisation et le nombre de ces transmissions ; renvoyer ladite notification de facilité d'utilisation audit terminal lors du passage d'un intervalle de temps prescrit ; et supprimer l'enregistrement de l'utilisateur concerné dans la file d'attente à attente de tour lorsque le nombre de transmissions atteint un nombre prescrit ou lorsque lesdites informations de confirmation de réception ont été reçues.

9. Système de commande d'objet de file d'attente selon les revendications 7 ou 8, dans lequel :
lesdits terminaux utilisateur sont configurés pour réaliser des enregistrements de file d'attente directement dans lesdits terminaux d'objet de file d'attente afin de réserver l'utilisation d'objets de file d'attente ;
ladite unité de manipulation de file d'attente, lors de l'acceptation des réservations d'utilisation pour lesdits groupes d'objets de file d'attente en provenance desdits terminaux utilisateur, à la fois enregistre des informations des utilisateurs qui ont réalisé les réservations d'utilisation dans les files d'attente à attente de tour dans lesdits groupes d'objets de file d'attente, établit un rapport desdites réservations d'utilisation qui ont été acceptées dans les terminaux d'objet de file d'attente des objets de file d'attente qui appartiennent auxdits groupes d'objets de file d'attente et transfert l'attribution de siège vacant ; et
ces terminaux d'objet de file d'attente comprennent d'autres unités de manipulation de file d'attente qui enregistrent et commandent des informations d'utilisateurs dans des files d'attente à attente de tour dans leurs propres objets de file d'attente d'après des réservations d'utilisation dont dans un rapport a été établi par ledit serveur de commande et des réservations d'utilisation directe en provenance desdits terminaux utilisateur.

10. Système de commande d'objet de file d'attente selon la revendication 9, dans lequel la notification de réservations d'utilisation dudit serveur de commande auxdits terminaux d'objet de file d'attente est réalisée au moyen uniquement d'identifiants desdits groupes d'objets de file d'attente.

11. Système de commande d'objet de file d'attente selon la revendication 10, dans lequel lesdites unités de manipulation de file d'attente sont configurées pour autoriser les réservations d'utilisation auxdits terminaux d'objet de file d'attente sans prendre en compte les demandes d'utilisation en provenance desdits terminaux d'utilisateur.

12. Système de commande d'objet de file d'attente selon la revendication 11, dans lequel lesdites unités de manipulation de file d'attente comprennent :
des règles d'addition de files d'attente d'objets de file d'attente permettant de déterminer s'il faut attribuer, à l'un quelconque des terminaux d'objet de file d'attente, des réservations d'utilisation, qui sont réalisées uniquement au moyen d'identifiants desdits groupes d'objets de file d'attente et sans prendre en compte les demandes d'utilisation en provenance desdits terminaux utilisateur ; et/ou
des règles de suppression de files d'attente d'objets de file d'attente permettant de déterminer s'il faut supprimer lesdites réservations d'utilisation de l'un quelconque desdits terminaux d'objet de file d'attente.

13. Système de commande d'objet de file d'attente selon la revendication 12, dans lequel lesdites règles d'addition de file d'attente d'objet de file d'attente et lesdites règles de suppression de file d'attente d'objet de file d'attente sont des règles permettant d'ajouter et de supprimer les identifiants desdits groupes d'objets de file d'attente selon le nombre d'enregistrements de réservation dans les files d'attente à attente de tour dudit serveur de commande et/ou le nombre d'enregistrements de réservations dans les files d'attente à attente de tour desdits terminaux d'objet de file d'attente.

14. Système de commande d'objet de file d'attente selon la revendication 9, dans lequel lesdits terminaux d'objet de file d'attente comprennent chacun une unité de notification de facilité d'utilisation permettant, lorsqu'un objet de file d'attente dans lequel un terminal d'objet de file d'attente est établi peut être utilisé, de transmettre en tant que notification de facilité d'utilisation la capacité à utiliser l'objet de file d'attente audit terminal utilisateur qui a été attribué en se basant sur l'attribution d'utilisation de ladite autre unité de manipulation de file d'attente du terminal d'objet de file d'attente.

15. Système de commande d'objet de file d'attente selon la revendication 9, dans lequel lesdits terminaux d'objet de file d'attente comprennent une unité d'acceptation d'informations d'état actuel qui peut acquérir des informations d'état actuel qui comprennent des informations de siège vacant desdits terminaux d'objet de file d'attente dans lesdits groupes d'objets de file d'attente au moyen dudit serveur de commande.

16. Système de commande d'objet de file d'attente selon l'une quelconque des revendications 7 à 15, dans lequel l'attribution d'utilisation auxdits utilisateurs qui sont enregistrés dans lesdites files d'attente à attente de tour desdites unités de manipulation de file d'attente lorsque lesdits objets de file d'attente peuvent être utilisés est réalisée pour des utilisateurs qui sont choisis selon des normes prescrites parmi l'un quelconque desdits utilisateurs qui sont en tête desdites files d'attente à attente de tour, les utilisateurs pour lesquels l'urgence a été enregistrée à l'avance, et les utilisateurs qui sont enregistrés dans des listes de membres spécifiques.

17. Système de commande d'objet de file d'attente selon l'une quelconque des revendications 7 à 16, dans lequel, lesdits groupes d'objets de file d'attente qui sont choisis au moyen de conditions indiquées par des demandeurs de services prescrits provenant de liste qui ont été enregistrées à l'avance.

18. Système de commande d'objet de file d'attente selon la revendication 17, dans lequel lesdits groupes d'objets de file d'attente sont des groupes de fournisseurs de services qui comprennent des magasins et des restaurants.

19. Système de commande d'objet de file d'attente selon la revendication 17, dans lequel lesdits groupes d'objets de file d'attente qui sont commandés par ledit serveur de commande sont l'un quelconque parmi : un groupe d'objets de file d'attente qui ont les mêmes conditions commerciales ; un groupe d'objets de file d'attente qui sont dans la même zone ; un groupe d'objets de file d'attente qui ont un niveau de popularité élevée ; un groupe d'objets de file d'attente qui ont un taux élevé de renouvellement d'utilisateurs ; un groupe d'objets de file d'attente qui sont classés comme les favoris des utilisateurs ; un groupe qui contient des objets de file d'attente dans lesquels des utilisateurs peuvent obtenir des bénéfices spéciaux ; ou une combinaison d'au moins deux de ces groupes.

20. Système de commande d'objet de file d'attente selon l'une quelconque des revendications 7 à 19, dans lequel ledit serveur de commande comprend en outre une unité de commande d'informations d'imputation (61) permettant d'accumuler des informations d'imputation pour chacun desdits objets de file d'attente ; et
des informations d'imputation qui correspondent à des objets de file d'attente qui deviennent disponibles à l'utilisation sont mises à jour au niveau de ladite unité de commande d'objet de file d'attente (13).

21. Terminal utilisateur (81), ledit terminal utilisateur étant le terminal utilisateur d'un système de commande d'objet de file d'attente dans lequel les terminaux d'objet de file d'attente (41) qui sont établis au niveau d'objets de file d'attente (40), les terminaux utilisateur permettant de réaliser des enregistrements de file d'attente pour réaliser des réservations desdits objets de file d'attente, et un serveur de commande (10) selon la revendication 1 permettant de commander lesdites files d'attente à attente de tour sont connectés au moyen d'un réseau de façon à permettre une communication, dans lequel lesdits objets de file d'attente ont été triés selon des catégories prescrites de telle sorte qu'une pluralité de files d'attente à attente de tour est définie ;
ledit terminal utilisateur comprenant :
une unité d'entrée opérateur (805) permettant d'entrer des informations ;
une unité de production d'informations de réservation de file d'attente (811) permettant de produire des informations de réservation de file d'attente au moyen d'informations qui ont été appliquées en tant qu'entrée par ladite unité d'entrée d'opérateur ;
un émetteur de réservation de file d'attente (812) permettant de transmettre des informations de réservation de file d'attente qui ont été produites vers une destination de sortie prescrite ; et
une unité d'acceptation d'informations de réservation (813) permettant d'accepter des informations récapitulatives qui ont été reçues dudit serveur de commande et qui comprennent l'occurrence de siège vacant ayant trait à des objets de file d'attente pour lesquels l'enregistrement de file d'attente a été réalisé,
dans lequel le terminal utilisateur (81) est adapté pour transmettre une demande d'enregistrement de file d'attente dans un groupe d'objets de file d'attente au serveur de commande (10).

22. Terminal utilisateur selon la revendication 21, dans lequel ledit terminal utilisateur consiste en un téléphone portable.

23. Terminal utilisateur selon la revendication 21, dans lequel ledit terminal utilisateur consiste en un terminal d'informations portable.

24. Terminal utilisateur selon la revendication 21, dans lequel ledit terminal utilisateur consiste en un dispositif d'entrée/sortie privé.

25. Procédé de commande d'objet de file d'attente, ledit procédé de commande d'objet de file d'attente étant le procédé de commande d'objet de file d'attente d'un système de commande d'objet de file d'attente dans lequel des terminaux d'objets de file d'attente (41) qui sont établis au niveau d'objets de file d'attente (40), des terminaux utilisateur (81) permettant de réaliser des enregistrements de files d'attente pour réaliser des réservations desdits objets de file d'attente, et un serveur de commande (10) permettant de commander les files d'attente à attente de tour sont connectés au moyen d'un réseau de façon à permettre une communication, dans lequel lesdits objets de file d'attente ont été triés selon des catégories prescrites de telle sorte qu'une pluralité de files d'attente à attente de tour est définie ; ledit procédé de commande d'objet de file d'attente comprenant les étapes dans lesquelles :
lesdits terminaux d'objets de file d'attente (41) transmettent des informations d'état actuel qui comprennent l'état de facilité d'utilisation desdits objets de file d'attente respectifs audit serveur de commande,
ledit serveur de commande (40) stocke de façon collective et commande les informations d'état actuel qui ont été reçues desdits terminaux d'objet de file d'attente ;
ledit terminal utilisateur (81) transmet une demande de réservation de file d'attente prescrite à un groupe d'objets de file d'attente d'après le contenu qui a été appliqué en tant qu'entrée par un utilisateur au moyen d'une unité d'actionnement ;
ledit serveur de commande accepte la demande de réservation de file d'attente dudit terminal utilisateur et enregistre la demande dans une file d'attente à attente de tour de groupe du groupe d'objets de file d'attente ;
ledit serveur de commande reconnaît qu'un objet de file d'attente qui appartient à un groupe d'objets de file d'attente est devenu disponible à l'utilisation en se basant sur les informations d'état actuel d'objets de file d'attente qui ont été stockées, sélectionne un terminal utilisateur qui est enregistré dans une file d'attente à attente de tour de groupe de l'objet de file d'attente, génère, comme information récapitulative, des informations de siège vacant ayant trait à l'objet de file d'attente en se basant sur des règles de récapitulation d'informations d'objet de file d'attente, et transmet les informations de siège vacant audit terminal utilisateur qui a été sélectionné ; et
ledit terminal utilisateur accepte les informations de siège vacant pour ledit objet de file d'attente qui est devenu disponible à l'utilisation.

26. Procédé de commande d'objet de file d'attente selon la revendication 25, comprenant en outre les étapes où :
lesdits terminaux d'objet de file d'attente (41) acceptent directement les demandes de réservation de file d'attente en provenance desdits terminaux utilisateur (81) ;
ledit serveur de commande (10) établit un rapport des demandes de réservation de file d'attente qui ont été acceptées en provenance desdits terminaux utilisateur (81) et enregistrées dans des files d'attente à attente de tour de groupe dans lesdits terminaux d'objet de file d'attente (41) qui sont affiliés aux files d'attente à attente de tour de group ; et
lesdits terminaux d'objet de file d'attente (41) enregistrent des demandes de réservation de file d'attente en provenance desdits terminaux utilisateur (81) et les demandes de réservation de file d'attente en provenance de terminaux utilisateur (81) dont un rapport a été établi par ledit serveur de commande (10) dans les files d'attente à attente de tour de groupe des terminaux d'objet de file d'attente (41) et sélectionnent lesdits terminaux utilisateur (81) qui sont enregistrés dans lesdites files d'attente à attente de tour de groupe lorsque les objets de file d'attente deviennent disponibles à l'utilisation.

27. Support d'enregistrement dans lequel un programme de commande est enregistré pour commander un serveur de commande (10) d'un système de commande d'objet de file d'attente dans lequel les terminaux d'objet de file d'attente (41) qui sont établis au niveau d'objets de file d'attente (40), des terminaux utilisateur (81) permettant de réaliser des enregistrements de file d'attente afin de réaliser des réservations desdits objets de file d'attente, et ledit serveur de commande permettant de commander lesdites files d'attente à attente de tour sont connectés au moyen d'un réseau de façon à permettre une communication, dans lequel lesdits objets de file d'attente ont été triés selon des catégories prescrites de telle sorte qu'une pluralité de files d'attente à attente de tour est définie ; un programme étant enregistré dans ledit support d'enregistrement afin d'amener un ordinateur dudit serveur de commande à exécuter les procédures pour :
recevoir des états de facilité d'utilisation d'objets de file d'attente depuis lesdits terminaux d'objet de file d'attente et contrôler si l'un quelconque desdits objets de file d'attente desdits groupes d'objets de file d'attente devient disponible à l'utilisation ;
recevoir une demande d'enregistrement de file d'attente qui a été transmise depuis un terminal utilisateur pour un groupe d'objets de file d'attente et enregistrer dans une file d'attente à attente de tour de groupe, et lorsqu'un objet de file d'attente qui appartient à un groupe d'objets de file d'attente devient disponible à l'utilisation, sélectionner un terminal utilisateur qui est enregistré dans la file d'attente à attente de tour de groupe dudit groupe d'objet de file d'attente ; et
transmettre une notification indiquant la capacité à utiliser ledit objet de file d'attente qui est devenu disponible à l'utilisation audit terminal utilisateur qui a été sélectionné.
